# EUROPEAN PATENT APPLICATION

(11) **EP 4 708 894 A1**
(43) Date of publication of application: **11.03.2026**
(21) Application number: 23940798.4
(22) Date of filing: 05.06.2023
(51) Int. Cl.: H04N 23/661, H04N 23/73, H04N 23/57, H04N 23/45, G06T 7/80, G06N 5/04, B60R 1/29, B60W 40/08

(54) **SIGNAL PROCESSING DEVICE FOR VEHICLE AND VEHICLE DISPLAY DEVICE COMPRISING SAME**

(71) Applicant: LG Electronics Inc., Yeongdeungpo-gu Seoul 07336 (KR)
(72) Inventor: KIM, Kihyeon, Seoul 06772 (KR); SEO, Yuna, Seoul 06772 (KR); KIM, Daekeun, Seoul 06772 (KR); LEE, Yonghwan, Seoul 06772 (KR)
(74) Representative: Vossius & Partner Patentanwälte Rechtsanwälte mbB
(86) International application number: PCT/KR2023/007717
(87) International publication number: WO 2024/253210

(57) **Abstract**

A signal processing device of a vehicle and a vehicle display apparatus including the same according to an embodiment of the present disclosure include a processor configured to receive camera data from a camera in a vehicle and to transmit at least some of the camera data or information related to the camera data to a cloud, wherein the processor is configured to perform a portion of image processing of the camera data and to control the cloud to perform another portion of the image processing of the camera data, and to execute at least one service based on result data of the image processing performed by the processor in the vehicle, and result data of the image processing performed by the cloud. Accordingly, it is possible to provide service by efficiently processing the camera data.

## Description

### BACKGROUND

### 1. Technical Field

The present disclosure relates to a signal processing device of a vehicle and a vehicle display apparatus including the same, and more particularly to a signal processing device of a vehicle capable of providing service by efficiently processing camera data, and a vehicle display apparatus including the signal processing device.

### 2. Description of the Related Art

A vehicle is a machine that allows a user to move in a desired direction. A typical example of the vehicle is an automobile.

Meanwhile, a signal processing device for vehicles is mounted in a vehicle for convenience of users using the vehicle.

The signal processing device in the vehicle receives sensor data from various in-vehicle sensor devices and processes the received sensor data.

Meanwhile, there is an increasing need for analyzing image data in a vehicle in order to provide various services in the vehicle.

The image analysis requires a dedicated AI model which is individually optimized for vehicle environment and pre-defined functions.

Meanwhile, the AI model can be improved with a wireless software update (OTA), but has a drawback in that an AI model provided in the cloud should be downloaded into a vehicle using limited computing resources, such that expansion of functions or services is significantly limited.

### SUMMARY

It is an objective of the present disclosure to provide a signal processing device of a vehicle capable of providing service by efficiently processing camera data, and a vehicle display apparatus including the signal processing device.

It is another objective of the present disclosure to provide a signal processing device of a vehicle capable of providing various functions or service by efficiently processing camera data, and a vehicle display apparatus including the signal processing device.

In accordance with an aspect of the present disclosure, the above and other objectives can be accomplished by providing a signal processing device of a vehicle and a vehicle display apparatus including the same, which include a processor configured to receive camera data from a camera in a vehicle and to transmit at least some of the camera data or information related to the camera data to a cloud, wherein the processor is configured to perform a portion of image processing of the camera data and to control the cloud to perform another portion of the image processing of the camera data, and to execute at least one service based on result data of the image processing performed by the processor in the vehicle, and result data of the image processing performed by the cloud.

Meanwhile, the processor can be configured to execute at least one service based on inference result data of an artificial intelligence (AI) model executed by the processor in the vehicle, and inference result data of an AI model executed by the cloud.

The signal processing device and the vehicle display apparatus including the same can further include a memory configured to store privacy data, wherein the processor can be configured to perform signal processing on a portion related to the privacy data among other portions of the camera data, and to transmit the processed camera data to the cloud.

Meanwhile, the processor can be configured to monitor an illumination level of the camera data, and to adjust exposure time of the camera based on a result of the monitoring.

Meanwhile, the processor can be configured to perform calibration on the camera data, and to perform a portion of image processing of the calibrated camera data and control the cloud to perform another portion of the image processing of the calibrated camera data.

Meanwhile, the processor can include a splitter configured to separate a portion of the camera data from another portion of the camera data, wherein the processor can be configured to perform a portion of image processing of the camera data separated by the splitter.

Meanwhile, based on a policy determined by the processor or the cloud, the processor can be configured to perform a portion of image processing of the camera data and control the cloud to perform another portion of the image processing of the camera data, and configured to change the image processing performed by the processor and the image processing performed by the cloud based on updating of the policy determined by the processor or the cloud.

Meanwhile, the camera can include an RGB camera and an IR camera, wherein the processor can be configured to perform image processing on a portion of camera data from the RGB camera or perform image processing on a portion of camera data from the IR camera, based on the policy determined by the processor.

Meanwhile, the camera can include an RGB camera and an IR camera, wherein the processor can be configured to perform a portion of image processing of the camera data from the RGB camera or perform a portion of image processing of the camera data from the IR camera, based on at least one of network latency with the cloud, time information, and average intensity of the camera data.

Meanwhile, the processor can be configured to extract regions of interest (ROIs) from the camera data and label the ROIs, and to transmit each of the ROIs to an AI model in the processor and an AI model in the cloud.

Meanwhile, the processor can be configured to generate a final context by synchronizing result data of each of the regions which are processed by the AI model in the processor or the AI model in the cloud, and to execute at least one service based on the final context.

Meanwhile, the processor can be configured to change priority of executed services or the number of executed services based on the number or position of passengers in the vehicle.

Meanwhile, the service can include a drowsiness recognition service, a lost article detection service, or a contamination detection service, or an action recognition service or an object recognition service.

Meanwhile, the processor can be configured to perform image processing on the camera data at a first time point and to execute a first service based on result data of the image processing, and configured to perform a portion of image processing of the camera data and control the cloud to perform another portion of the image processing of the camera data at a second time point, and to execute the first service based on result data of the image processing performed by the processor in the vehicle and result data of the image processing performed by the cloud.

Meanwhile, based on input audio data in the vehicle, the processor can be configured to perform a portion of image processing of the camera data and control the cloud to perform another portion of the image processing of the camera data.

Meanwhile, the processor can be configured to perform image processing on the camera data at a first time point and to execute a first service based on result data of the image processing, and configured to perform a portion of image processing of the camera data and control the cloud to perform another portion of the image processing of the camera data based on input audio data in the vehicle at a second time point, and to execute the first service based on result data of the image processing performed by the processor in the vehicle and result data of the image processing performed by the cloud.

Meanwhile, the processor can be configured to determine a passenger type or calculate a usage frequency based on the result data of the image processing performed by the processor in the vehicle and the result data of the image processing performed by the cloud, and to change a service to be executed or change a service execution location based on the passenger type or usage frequency.

In accordance with another aspect of the present disclosure, the above and other objectives can be accomplished by providing a signal processing device of a vehicle and a vehicle display apparatus including the same, which include a processor configured to receive camera data from a camera in a vehicle and to transmit at least some of the camera data or information related to the camera data to a cloud, wherein the processor is configured to change an image processing sharing ratio between image processing of camera data and image processing by the cloud based on an executed service.

### EFFECTS OF THE DISCLOSURE

A signal processing device of a vehicle and a vehicle display apparatus including the same according to an embodiment of the present disclosure include a processor configured to receive camera data from a camera in a vehicle and to transmit at least some of the camera data or information related to the camera data to a cloud, wherein the processor is configured to perform a portion of image processing of the camera data and to control the cloud to perform another portion of the image processing of the camera data, and to execute at least one service based on result data of the image processing performed by the processor in the vehicle, and result data of the image processing performed by the cloud. Accordingly, it is possible to provide service by efficiently processing the camera data.

Meanwhile, the processor can be configured to execute at least one service based on inference result data of an artificial intelligence (AI) model executed by the processor in the vehicle, and inference result data of an AI model executed by the cloud. Accordingly, it is possible to provide service by efficiently processing the camera data.

The signal processing device and the vehicle display apparatus including the same can further include a memory configured to store privacy data, wherein the processor can be configured to perform signal processing on a portion related to the privacy data among other portions of the camera data, and to transmit the processed camera data to the cloud. Accordingly, it is possible to provide service by efficiently processing the camera data while protecting privacy.

Meanwhile, the processor can be configured to monitor an illumination level of the camera data, and to adjust exposure time of the camera based on a result of the monitoring. Accordingly, it is possible to provide service by efficiently processing the camera data while ensuring a stable illumination level.

Meanwhile, the processor can be configured to perform calibration on the camera data, and to perform a portion of image processing of the calibrated camera data and control the cloud to perform another portion of the image processing of the calibrated camera data. Accordingly, it is possible to provide service by efficiently processing the camera data.

Meanwhile, the processor can include a splitter configured to separate a portion of the camera data from another portion of the camera data, wherein the processor can be configured to perform a portion of image processing of the camera data separated by the splitter. Accordingly, it is possible to provide service by efficiently processing the camera data.

Meanwhile, based on a policy determined by the processor or the cloud, the processor can be configured to perform a portion of image processing of the camera data and control the cloud to perform another portion of the image processing of the camera data, and configured to change the image processing performed by the processor and the image processing performed by the cloud based on updating of the policy determined by the processor or the cloud. Accordingly, it is possible to provide service by efficiently processing the camera data.

Meanwhile, the camera can include an RGB camera and an IR camera, wherein the processor can be configured to perform image processing on a portion of camera data from the RGB camera or perform image processing on a portion of camera data from the IR camera, based on the policy determined by the processor. Accordingly, it is possible to provide service by efficiently processing the camera data.

Meanwhile, the camera can include an RGB camera and an IR camera, wherein the processor can be configured to perform a portion of image processing of the camera data from the RGB camera or perform a portion of image processing of the camera data from the IR camera, based on at least one of network latency with the cloud, time information, and average intensity of the camera data. Accordingly, it is possible to provide service by efficiently processing the camera data.

Meanwhile, the processor can be configured to extract regions of interest (ROIs) from the camera data and label the ROIs, and to transmit each of the ROIs to an AI model in the processor and an AI model in the cloud. Accordingly, it is possible to provide service by efficiently processing the camera data.

Meanwhile, the processor can be configured to generate a final context by synchronizing result data of each of the regions which are processed by the AI model in the processor or the AI model in the cloud, and to execute at least one service based on the final context. Accordingly, it is possible to provide service by efficiently processing the camera data. Further, customized services can be provided.

Meanwhile, the processor can be configured to change priority of executed services or the number of executed services based on the number or position of passengers in the vehicle. Accordingly, customized services can be provided while efficiently processing the camera data.

Meanwhile, the service can include a drowsiness recognition service, a lost article detection service, or a contamination detection service, or an action recognition service or an object recognition service. Accordingly, various services can be provided while efficiently processing the camera data.

Meanwhile, the processor can be configured to perform image processing on the camera data at a first time point and to execute a first service based on result data of the image processing, and configured to perform a portion of image processing of the camera data and control the cloud to perform another portion of the image processing of the camera data at a second time point, and to execute the first service based on result data of the image processing performed by the processor in the vehicle and result data of the image processing performed by the cloud. Accordingly, it is possible to provide service by efficiently processing the camera data.

Meanwhile, based on input audio data in the vehicle, the processor can be configured to perform a portion of image processing of the camera data and control the cloud to perform another portion of the image processing of the camera data. Accordingly, it is possible to provide service by efficiently processing the camera data.

Meanwhile, the processor can be configured to perform image processing on the camera data at a first time point and to execute a first service based on result data of the image processing, and configured to perform a portion of image processing of the camera data and control the cloud to perform another portion of the image processing of the camera data based on input audio data in the vehicle at a second time point, and to execute the first service based on result data of the image processing performed by the processor in the vehicle and result data of the image processing performed by the cloud. Accordingly, it is possible to provide service by efficiently processing the camera data.

Meanwhile, the processor can be configured to determine a passenger type or calculate a usage frequency based on the result data of the image processing performed by the processor in the vehicle and the result data of the image processing performed by the cloud, and to change a service to be executed or change a service execution location based on the passenger type or usage frequency. Accordingly, customized services can be provided while efficiently processing the camera data.

A signal processing device of a vehicle and a vehicle display apparatus including the same according to another embodiment of the present disclosure include a processor configured to receive camera data from a camera in a vehicle and to transmit at least some of the camera data or information related to the camera data to a cloud, wherein the processor is configured to change an image processing sharing ratio between image processing of camera data and image processing by the cloud based on an executed service. Accordingly, it is possible to provide service by efficiently processing the camera data.

### BRIEF DESCRIPTION OF THE DRAWINGS

FIG. 1 is a view showing an example of the exterior and interior of a vehicle;
FIGS. 2A to 2C are diagrams illustrating various architectures of a vehicle communication gateway according to an embodiment of the present disclosure;
FIG. 3A is a diagram illustrating an example of a plurality of displays in a vehicle according to an embodiment of the present disclosure;
FIG. 3B is a diagram illustrating a vehicle display apparatus including the plurality of displays of FIG. 3A;
FIG. 4 is an exemplary internal block diagram of the vehicle display apparatus of FIG. 3B;
FIG. 5A is a diagram illustrating an example of a signal processing system according to an embodiment of the present disclosure;
FIG. 5B is a diagram illustrating another example of a signal processing system according to an embodiment of the present disclosure; and
FIGS. 6A to 18 are diagrams referred to in the description of FIG. 5A or FIG. 5B.

### DETAILED DESCRIPTION

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" can be used interchangeably.

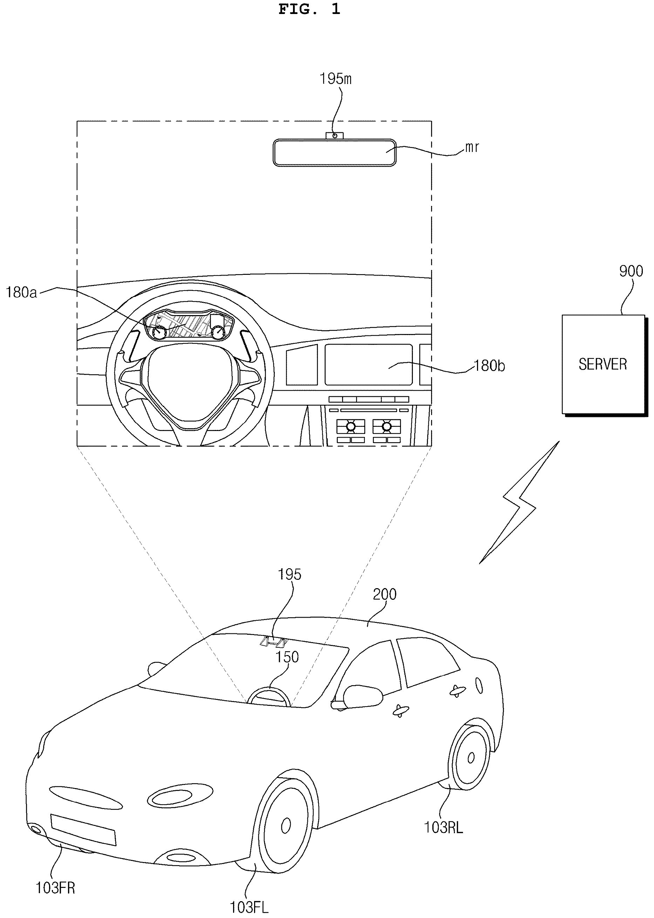

FIG. 1 is a view showing an example of the exterior and interior of a vehicle.

Referring to the figure, the vehicle 200 is moved by a plurality of wheels 103FR, 103FL, 103RL,... rotated by a power source and a steering wheel 150 configured to adjust an advancing direction of the vehicle 200.

Meanwhile, the vehicle 200 can further include a camera 195 configured to acquire an image of the front of the vehicle, and a vehicle internal camera 195m configured to acquire an image of the interior of the vehicle.

In the drawing, an example is illustrated in which the vehicle internal camera 195m is attached to the top of a room mirror mr, but can be modified in various ways.

Meanwhile, the vehicle 200 can be further provided therein with a plurality of displays 180a and 180b configured to display images and information.

In FIG. 1, a cluster display 180a and an audio video navigation (AVN) display 180b are illustrated as the plurality of displays 180a and 180b. In addition, a head up display (HUD) can also be used.

Meanwhile, the audio video navigation (AVN) display 180b can also be called a center information display.

Meanwhile, the vehicle 200 can exchange data with the server 900.

Meanwhile, the vehicle 200 described in this specification can be a concept including all of a vehicle having an engine as a power source, a hybrid vehicle having an engine and an electric motor as a power source, and an electric vehicle having an electric motor as a power source.

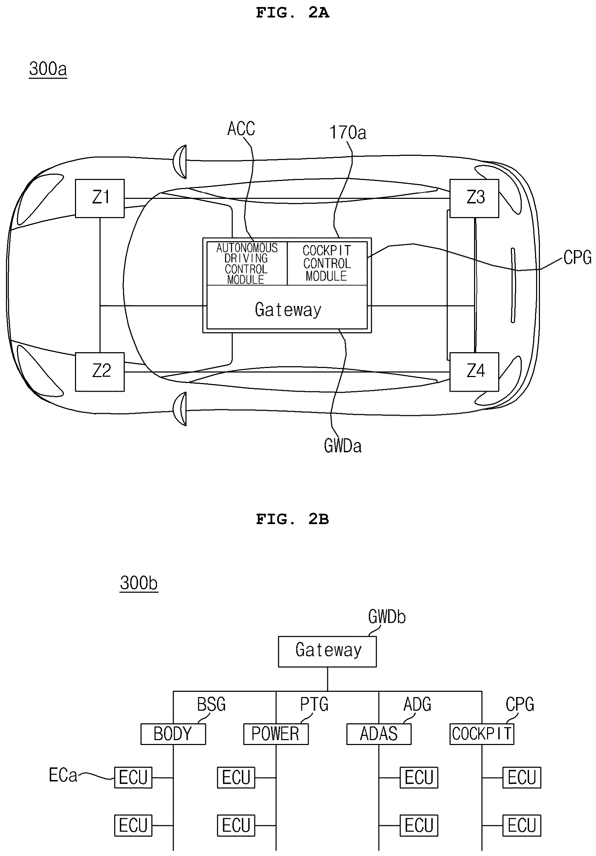

FIGS. 2A to 2C are diagrams illustrating various architectures of a vehicle communication gateway according to an embodiment of the present disclosure.

First, FIG. 2A is a diagram illustrating a first architecture of a vehicle communication gateway according to an embodiment of the present disclosure.

Referring to the drawing, the first architecture 300a can correspond to a zone-based architecture.

Accordingly, in-vehicle sensor devices and processors can be mounted in each of a plurality of zones Z1 to Z4, and a signal processing device 170a including a vehicle communication gateway GWDa can be disposed at the center of the plurality of zones Z1 to Z4.

Meanwhile, the signal processing device 170a can further include an autonomous driving control module ACC, a cockpit control module CPG, etc., in addition to the vehicle communication gateway GWDa.

The vehicle communication gateway GWDa in the signal processing device 170a can be a High Performance Computing (HPC) gateway.

As an integrated HPC gateway, the signal processing device 170a of FIG. 2A can exchange data with an external communication module (not shown) or processors (not shown) in the plurality of zones Z1 to Z4.

FIG. 2B is a diagram illustrating a second architecture of a vehicle communication gateway according to an embodiment of the present disclosure.

Referring to the drawing, a second architecture 300b can correspond to a domain integrated architecture.

Accordingly, a body chassis control module (BSG), a power control module (PTG), an ADAS control module (ADG), and a cockpit control module (CPG) are connected in parallel to a gateway GWDb, and a plurality of processors ECU can be electrically connected to the respective modules BSG, PTG, ADG, and CPG.

Meanwhile, the respective processors ECU can be connected to the gateway GWDb while being integrated therein.

Meanwhile, the signal processing device 170 including the gateway GWDb of FIG. 2B can function as a domain integrated signal processing device.

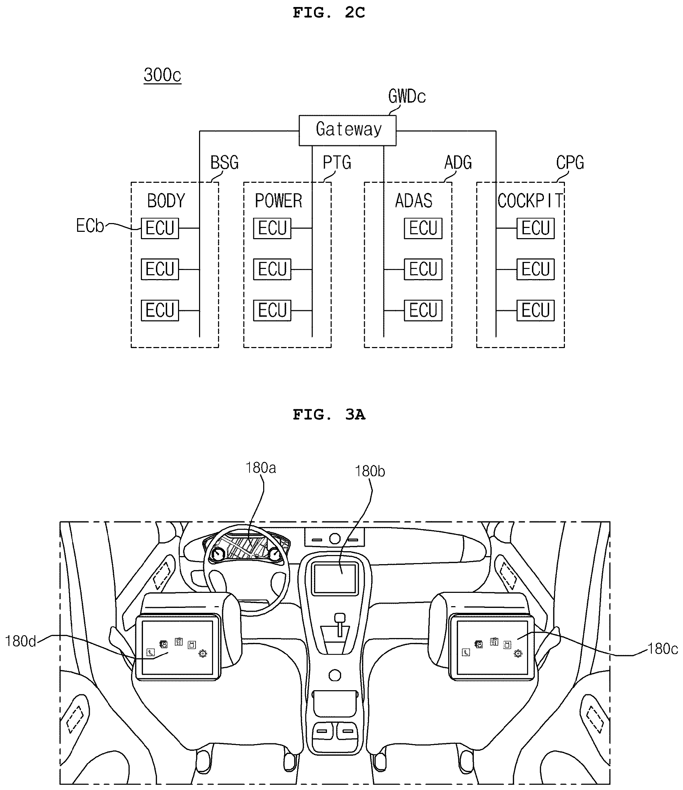

FIG. 2C is a diagram illustrating a third architecture of a vehicle communication gateway according to an embodiment of the present disclosure.

Referring to the drawing, a third architecture 300c can correspond to a distributed architecture.

Accordingly, the body chassis control module (BSG), the power control module (PTG), the ADAS control module (ADG), and the cockpit control module (CPG) are connected in parallel to a gateway GWDc, and particularly a plurality of processors ECU in the respective control modules can be electrically connected in parallel to the gateway GWDc.

In comparison with FIG. 2B, the third architecture has a difference in that the respective processors ECU are connected directly to the gateway GWDc without being connected to another module.

Meanwhile, the signal processing device 170 including the gateway GWDc of FIG. 2C functions as a distributed signal processing device.

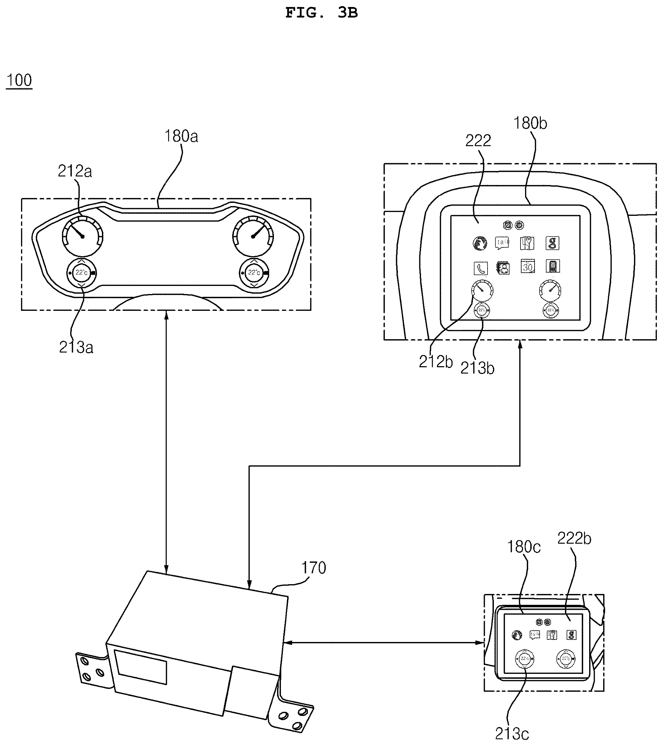

FIG. 3 is an exemplary internal block diagram of a signal processing device of FIG. 2A.

Referring to the drawing, the signal processing device 170 according to an embodiment of the present disclosure includes: a first processor 732a, which based on a first communication scheme, is configured to receive a first message including a sensor signal in a vehicle and to perform signal processing on the received first message; and a second processor 732b, which based a second communication scheme, is configured to receive a second message including a communication message received from an external source and to perform signal processing of the received second message.

In this case, the second communication scheme can have a faster communication speed or a wider bandwidth than the first communication scheme.

For example, the second communication scheme can be Ethernet communication, and the first communication scheme can be CAN communication. Accordingly, the first message can be a CAN message, and the second message can be an Ethernet message.

Meanwhile, the signal processing device 170 according to an embodiment of the present disclosure further includes: a first memory 320 having an IPC channel; and a second memory 330 storing sensor data including vehicle speed data.

For example, the first memory 320 can be a Static RAM (SRAM), and the second memory 330 can be a DDR memory. Particularly, the second memory 330 can be a Double data rate synchronous dynamic random access memory (DDR SDRAM).

Meanwhile, the signal processing device 170 according to an embodiment of the present disclosure includes a shared memory 508 which operates for transmitting the first message or the second message between the first processor 732a and the second processor 732b.

As described above, by performing inter-processor communication using the shared memory 508 during the communication between the first processor 732a and the second processor 732b, latency can be reduced and high-speed data transmission can be performed during inter-processor communication.

Meanwhile, it is desired that the shared memory 508 is provided in the first memory 320. Accordingly, latency can be reduced and high-speed data transmission can be performed during inter-processor communication.

Meanwhile, the first processor 732a can include a plurality of processor cores 317o, 317a, and 317b disposed therein.

Meanwhile, the first processor 732a can further include an interface 319 for receiving the CAN message from external vehicle sensors.

For example, a first processor core 317o included in the first processor 732a can execute a plurality of applications or can execute a first AUTomotive Open System Architecture (AUTOSAR) 312.

Particularly, by executing a second AUTOSAR 312, the first processor core 317o can execute an inter-processor communication (IPC) handler 314.

Meanwhile, the IPC handler 314 can exchange data with the first memory 320 or can exchange IPC data with an application executed on the core 317o.

Meanwhile, the IPC handler 314 can exchange an interrupt signal with an IPC driver 348 included in the second processor 732b.

Meanwhile, a second processor core 317a included in the first processor 732a can execute IDS and can receive CAN data from the second memory 330.

Meanwhile, a third core 317b included in the first processor 732a can execute Logging, and can store the CAN data, received through the interface 319, in the second memory 330.

Meanwhile, the third processor core 317b included in the first processor 732a can execute an IPC module 318 to exchange IPC data with the first memory 320.

Meanwhile, the third processor core 317b included in the first processor 732a can transmit an interrupt signal to the IPC driver 348 in the second processor 732b.

The first memory 320 can exchange the IPC data with the IPC handler 314 or the IPC module 318.

Meanwhile, the second processor 732b can execute an application 343, the IPC handler 345, an IPC daemon 346, the IPC driver 348, and the like.

Meanwhile, the second processor 732b can further execute a service oriented architecture (SOA) adapter 341, a diagnosis cloud 342, and the second AUTOSAR 347.

The second AUTOSAR 347 can be an adaptive AUTOSAR, and the first AUTOSAR 312 can be a classic AUTOSAR.

The IPC daemon 346 can exchange an interrupt signal with the SOA adapter 341, the diagnosis cloud 342, the IPC handler 345, the IPC driver 348, and the like.

Meanwhile, the first memory 320 can exchange IPC data with the SOA adapter 341, the diagnosis cloud 342, the IPC handler 345, and the like.

Meanwhile, the IPC data described with reference to FIG. 3 can be the CAN message or Ethernet message.

Meanwhile, the IPC handler 345 can function as a service provider providing data such as diagnosis, firmware, upgrade, system information, etc., based on the second AUTOSAR 347.

Meanwhile, although not illustrated in FIG. 3, the first processor 732a implements a message router (not shown), and the message router can convert a frame of the first message, such as the CAN message, into a frame format of the second message, such as the Ethernet message, and can transmit the converted message to the second processor 732b.

Meanwhile, although not illustrated in FIG. 3, the first processor 732a can further implement a CAN driver (not shown) and a CAN interface (not shown).

For example, the CAN interface (not shown) can be implemented by a total of 16 channels, with eight channels of each of a fourth processor core (not shown) and a fifth processor core (not shown) in the first processor 732a.

In this case, a first CAN interface (not shown) implemented on the fourth processor core (not shown) can correspond to a first queue (PTb) during inter-processor communication, and a second CAN interface (not shown) implemented on the fifth processor core (not shown) can correspond to a second queue (PTb), having a higher priority than the first queue (PTb), during inter-processor communication.

FIG. 3A is a diagram illustrating an example of a plurality of displays in a vehicle according to an embodiment of the present disclosure.

Referring to the figure, a cluster display 180a, an audio video navigation (AVN) display 180b, rear seat entertainment displays 180c and 180d, and a rear-view mirror display (not shown) can be mounted in the vehicle.

FIG. 3B is a diagram illustrating a vehicle display apparatus including the plurality of displays of FIG. 3A.

The vehicle display apparatus 100 according to the embodiment of the present disclosure can include a plurality of displays 180a and 180b and a signal processing device 170 configured to perform signal processing in order to display images and information on the plurality of displays 180a and 180b.

The first display 180a, which is one of the plurality of displays 180a and 180b, can be a cluster display 180a configured to display a driving state and operation information, and the second display 180b can be an audio video navigation (AVN) display 180b configured to display vehicle driving information, a navigation map, various kinds of entertainment information, or an image.

The signal processing device 170 can have a processor 175 provided therein, and first to third virtual machines (not shown) can be executed by a hypervisor 505 in the processor 175.

The second virtual machine (not shown) can be operated for the first display 180a, and the third virtual machine (not shown) can be operated for the second display 180b.

Meanwhile, the first virtual machine (not shown) in the processor 175 can be configured to set a shared memory 508 based on the hypervisor 505 for transmission of the same data to the second virtual machine (not shown) and the third virtual machine (not shown). Consequently, the first display 180a and the second display 180b in the vehicle can display the same information or the same images in a synchronized state.

Meanwhile, the first virtual machine (not shown) in the processor 175 shares at least some of data with the second virtual machine (not shown) and the third virtual machine (not shown) for divided processing of data. Consequently, the plurality of virtual machines for the plurality of displays in the vehicle can divide and process data.

Meanwhile, the first virtual machine (not shown) in the processor 175 can receive and process wheel speed sensor data of the vehicle, and can transmit the processed wheel speed sensor data to at least one of the second virtual machine (not shown) or the third virtual machine (not shown). Consequently, at least one virtual machine can share the wheel speed sensor data of the vehicle.

Meanwhile, the vehicle display apparatus 100 according to the embodiment of the present disclosure can further include a rear seat entertainment (RSE) display 180c configured to display driving state information, simple navigation information, various kinds of entertainment information, or an image.

The signal processing device 170 can further execute a fourth virtual machine (not shown), in addition to the first to third virtual machines (not shown), on the hypervisor 505 in the processor 175 to control the RSE display 180c.

Consequently, it is possible to control various displays 180a to 180c using a single signal processing device 170.

Meanwhile, some of the plurality of displays 180a to 180c can be operated based on a Linux Operating System (OS), and others can be operated based on a Web Operating System (OS).

The signal processing device 170 according to the embodiment of the present disclosure can be configured to display the same information or the same images in a synchronized state on the displays 180a to 180c to be operated under various operating systems.

Meanwhile, FIG. 3B illustrates that a vehicle speed indicator 212a and an in-vehicle temperature indicator 213a are displayed on the first display 180a, a home screen 222 including a plurality of applications, a vehicle speed indicator 212b, and an in-vehicle temperature indicator 213b is displayed on the second display 180b, and a second home screen 222b including a plurality of applications and an in-vehicle temperature indicator 213c is displayed on the third display 180c.

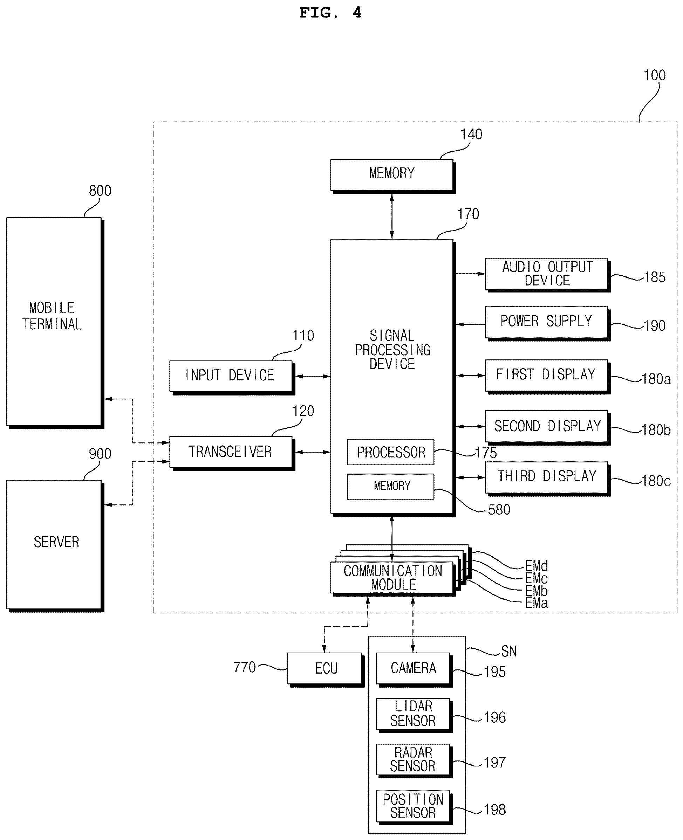

FIG. 4 is an exemplary internal block diagram of the vehicle display apparatus of FIG. 3B.

Referring to the figure, the vehicle display apparatus 100 according to the embodiment of the present disclosure can include an input device 110, a transceiver 120 for communication with an external device, a plurality of communication modules EMa to EMd for internal communication, a memory 140, a signal processing device 170, a plurality of displays 180a to 180c, an audio output device 185, and a power supply 190.

The plurality of communication modules EMa to EMd can be disposed in a plurality of zones Z1 to Z4, respectively, in FIG. 2A.

Meanwhile, the signal processing device 170 can be provided therein with an Ethernet switch (not shown) for data communication with the respective communication modules EM1 to EM4.

The respective communication modules EM1 to EM4 can perform data communication with a plurality of sensor devices SN or an ECU 770.

Meanwhile, each of the plurality of sensor devices SN can include a camera 195, a lidar sensor 196, a radar sensor 197, or a position sensor 198.

The input device 110 can include a physical button or pad for button input or touch input.

Meanwhile, the input device 110 can include a microphone (not shown) for user voice input.

The transceiver 120 can wirelessly exchange data with a mobile terminal 800 or a cloud 900.

In particular, the transceiver 120 can wirelessly exchange data with a mobile terminal of a vehicle driver. Any of various data communication schemes, such as Bluetooth, Wi-Fi, WIFI Direct, and APIX, can be used as a wireless data communication scheme.

The transceiver 120 can receive weather information and road traffic situation information, such as transport protocol expert group (TPEG) information, from the mobile terminal 800 or the cloud 900. To this end, the transceiver 120 can include a mobile communication module (not shown).

The plurality of communication modules EM1 to EM4 can receive sensor information from an electronic control unit (ECU) 770 or a sensor device SN, and can transmit the received information to the signal processing device 170.

Here, the sensor information can include at least one of vehicle direction information, vehicle position information (global positioning system (GPS) information), vehicle angle information, vehicle velocity information, vehicle acceleration information, vehicle inclination information, vehicle forward/backward movement information, battery information, fuel information, tire information, vehicle lamp information, in-vehicle temperature information, and in-vehicle humidity information.

The sensor information can be acquired from a heading sensor, a yaw sensor, a gyro sensor, a position sensor, a vehicle forward/backward movement sensor, a wheel sensor, a vehicle velocity sensor, a car body inclination sensor, a battery sensor, a fuel sensor, a tire sensor, a steering-wheel-rotation-based steering sensor, an in-vehicle temperature sensor, or an in-vehicle humidity sensor.

Meanwhile, the position module can include a GPS module configured to receive GPS information or a position sensor 198.

Meanwhile, at least one of the plurality of communication modules EM1 to EM4 can transmit position information data sensed by the GPS module or the position sensor 198 to the signal processing device 170.

Meanwhile, at least one of the plurality of communication modules EM1 to EM4 can receive front-of-vehicle image data, side-of-vehicle image data, rear-of-vehicle image data, and obstacle-around-vehicle distance information from the camera 195, the lidar sensor 196, or the radar sensor 197, and can transmit the received information to the signal processing device 170.

The memory 140 can store various data necessary for overall operation of the vehicle display apparatus 100, such as programs for processing or control of the signal processing device 170.

For example, the memory 140 can store data about the hypervisor and first to third virtual machines executed by the hypervisor in the processor 175.

The audio output device 185 can convert an electrical signal from the signal processing device 170 into an audio signal, and can output the audio signal. To this end, the audio output device 185 can include a speaker.

The power supply 190 can supply power necessary to operate components under control of the signal processing device 170. In particular, the power supply 190 can receive power from a battery in the vehicle.

The signal processing device 170 can control overall operation of each device in the vehicle display apparatus 100.

For example, the signal processing device 170 can include a processor 175 configured to perform signal processing for the vehicle displays 180a and 180b.

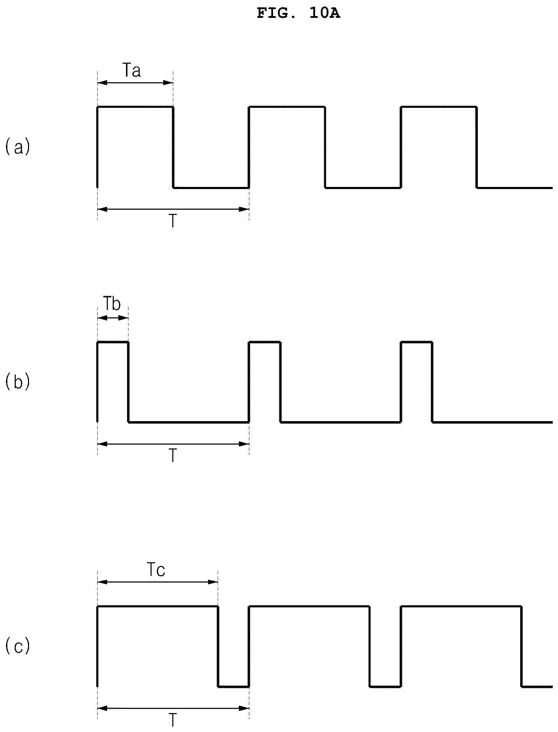

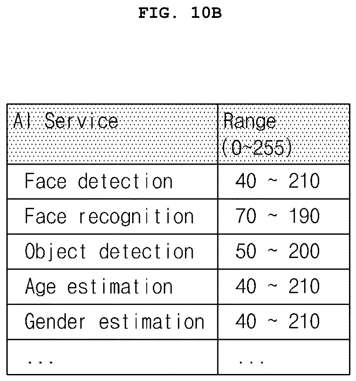

The processor 175 can execute the first to third virtual machines (not shown) on the hypervisor 505 (see FIG. 10) in the processor 175.

Among the first to third virtual machines (not shown) (see FIG. 10), the first virtual machine (not shown) can be called a server virtual machine, and the second and third virtual machines (not shown) and (not shown) can be called guest virtual machines.

For example, the first virtual machine (not shown) in the processor 175 can receive sensor data from the plurality of sensor devices, such as vehicle sensor data, position information data, camera image data, audio data, or touch input data, and can process and output the received sensor data.

As described above, the first virtual machine (not shown) can process most of the data, whereby 1:N data sharing can be achieved.

In another example, the first virtual machine (not shown) can directly receive and process CAN data, Ethernet data, audio data, radio data, USB data, and wireless communication data for the second and third virtual machines (not shown).

Further, the first virtual machine (not shown) can transmit the processed data to the second and third virtual machines (not shown).

Accordingly, only the first virtual machine (not shown), among the first to third virtual machines (not shown), can receive sensor data from the plurality of sensor devices, communication data, or external input data, and can perform signal processing, whereby load in signal processing by the other virtual machines can be reduced and 1:N data communication can be achieved, and therefore synchronization at the time of data sharing can be achieved.

Meanwhile, the first virtual machine (not shown) can be configured to write data in the shared memory 508, whereby the second virtual machine (not shown) and the third virtual machine (not shown) share the same data.

For example, the first virtual machine (not shown) can be configured to write vehicle sensor data, the position information data, the camera image data, or the touch input data in the shared memory 508, whereby the second virtual machine (not shown) and the third virtual machine (not shown) share the same data. Consequently, 1:N data sharing can be achieved.

Eventually, the first virtual machine (not shown) can process most of the data, whereby 1:N data sharing can be achieved.

Meanwhile, the first virtual machine (not shown) in the processor 175 can be configured to set the shared memory 508 based on the hypervisor 505 in order to transmit the same data to the second virtual machine (not shown) and the third virtual machine (not shown).

Meanwhile, the signal processing device 170 can process various signals, such as an audio signal, an image signal, and a data signal. To this end, the signal processing device 170 can be implemented in the form of a system on chip (SOC).

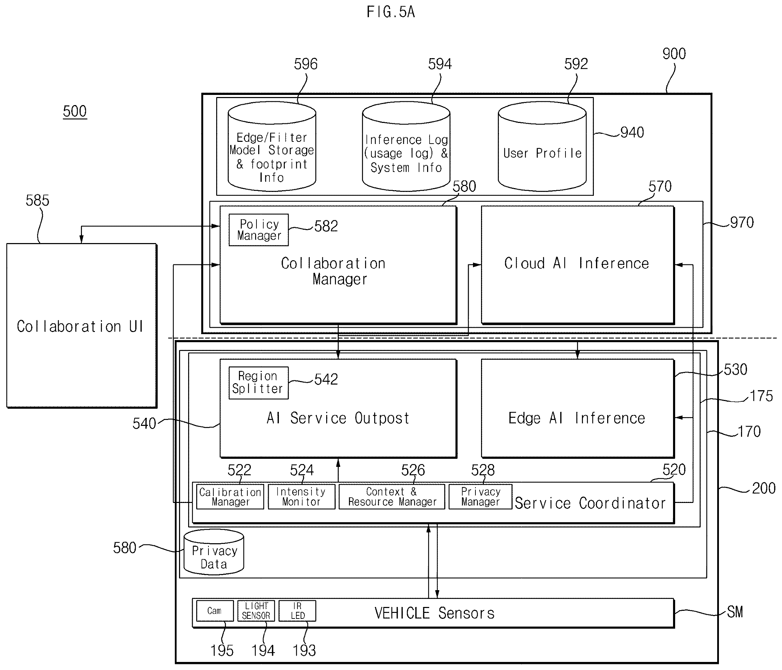

FIG. 5A is a diagram illustrating an example of a signal processing system according to an embodiment of the present disclosure.

Referring to FIG. 5A, a signal processing system 500 according to an embodiment of the present disclosure includes a vehicle 200 which is an edge device, and a cloud 900.

Meanwhile, the signal processing system 500 according to an embodiment of the present disclosure can further include a mobile terminal 800 that provides a collaboration user interface 585.

The vehicle 200 includes a sensor device SN, such as a camera 195, a light sensor 194, an IR LED 193, etc., and a signal processing device 170 configured to process a sensing signal from the sensor device SN.

The signal processing device 170 according to an embodiment of the present disclosure includes a processor 175 configured to receive camera data from a vehicle internal camera 195m and to transmit at least some of the camera data or information related to the camera data to the cloud 900.

The processor 175 according to an embodiment of the present disclosure performs image processing on a portion the camera data, and controls the cloud 900 to perform image processing on another portion of the camera data.

The processor 175 according to an embodiment of the present disclosure executes at least one service based on result data of the image processing performed by the processor 175 in the vehicle 200, and result data of the image processing performed by the cloud 900. Accordingly, it is possible to provide service by efficiently processing the camera data.

Meanwhile, the processor 175 can execute at least one service based on inference result data of an artificial intelligence (AI) model executed by the processor 175 in the vehicle 200, and inference result data of an AI model executed by the cloud 900. Accordingly, it is possible to provide service by efficiently processing the camera data.

Meanwhile, the signal processing device 170 according to an embodiment of the present disclosure further includes a memory 580 configured to store privacy data.

Meanwhile, the signal processing device 170 according to an embodiment of the present disclosure can execute a service coordinator 520 that operates to provide a service, a reasoner 530 that performs AI model-based inference in the processor 175 of the vehicle 200, and a service outpost 540 that selects or reconstructs camera data.

The service coordinator 520 can determine whether to perform image processing by the processor 175 in the vehicle 200 or the cloud 900.

Meanwhile, the service coordinator 520 can send a request for image processing, particularly a request for AI-based inference, to the reasoner 530 in the vehicle 200 or a reasoner 570 in the cloud 900.

Meanwhile, the service coordinator 520 can execute a calibration manager 522 configured to manage calibration, a monitor 524 configured to monitor an illumination level of the camera data and the like, a context manager 526 configured to determine context based on the result data of the reasoner 530 in the vehicle 200 or the reasoner 570 in the cloud 900, and a privacy manager 528 configured to manage privacy.

Meanwhile, the calibration manager 522 can perform calibration on the camera data.

For example, the calibration manager 522 in the processor 175 can perform overall camera data calibration in order to compensate for a field of view difference from a representative model selected by a policy manager 582, and a shift of position of the internal camera 195m, and the like.

Meanwhile, the monitor 524 in the processor 175 can monitor an illumination level of the camera data, and can adjust the exposure time of the camera 195m. Accordingly, it is possible to provide service by efficiently processing the camera data while ensuring a stable illumination level.

Meanwhile, the context manager 526 in the processor 175 can determine context, which is status in the vehicle, based on the result data of the reasoner 530 in the vehicle 200 or the reasoner 570 in the cloud 900, and can change a service to be provided based on the determined context.

For example, the context manager 526 can check the number and position of passengers in the vehicle based on the result data of the reasoner 530 in the vehicle 200 or the reasoner 570 in the cloud 900, and can change and provide at least one of a drowsiness recognition service, a lost article detection service, a cleanliness service, and various other services.

Meanwhile, the context manager 526 in the processor 175 can change the priority of executed services or the number of executed services based on the number or position of passengers in the vehicle 200. Accordingly, customized services can be provided while efficiently processing the camera data.

The privacy manager 528 can determine whether privacy is required, and can perform signal processing, such as blurring and encryption processing, on the camera data if privacy is required.

Meanwhile, the reasoner 530 in the processor 175 can perform AI model-based image processing required for each used service or case, and can output result data. Particularly, the reasoner 530 in the processor 175 can output inference result data.

Meanwhile, the service outpost 540 in the processor can include or execute a splitter 542 configured to separate a portion of the camera data from another portion of the camera data.

The splitter 542 can filter each of a portion and another portion of the camera data and can provide the filtered data to the reasoner 530 in the processor 175 or the reasoner 570 in the cloud 900, and the like.

Meanwhile, the reasoner 530 in the processor 175 can perform a portion of image processing of the camera data separated by the splitter 542. Accordingly, it is possible to provide service by efficiently processing the camera data.

Meanwhile, the cloud 900 includes a signal processing device 970 and a memory 940.

The signal processing device 970 in the cloud 900 executes the reasoner 570 and a collaboration manager 580.

The reasoner 570 in the cloud 900 performs image processing on other portions of the camera data based on an inference request received from the signal processing device 170 of the vehicle which is an edge device.

Particularly, the reasoner 570 in the cloud 900 performs image processing on other portions of the camera data based on an AI model, and outputs inference result data to the signal processing device 170.

Meanwhile, the collaboration manager 580 can execute the policy manager 582 for policy management.

Meanwhile, the policy manager 582 can execute a calibration policy, intensity policy, model collaboration policy, and the like.

For example, the policy manager 582 can determine a calibration parameter set based on the camera data transmitted from the signal processing device 170 in the vehicle 200 and the like, and can perform representative model matching.

Meanwhile, the policy manager 582 can change a model depending on an input state of the camera data.

Meanwhile, the policy manager 582 can generate or manage a model for operating AI models, such as service coordination between the edge device and the cloud, and the like.

Meanwhile, the policy manager 582 can select a representative model based on a camera installation location, and can calculate and output a value, extracted from a region, which is required for compensating for a field of view difference from the representative model.

Meanwhile, the policy manager 582 can make determination based on vehicle model information, camera information such as field of view and the like, camera data, and the like.

Meanwhile, the policy manager 582 can determine an average intensity range of the camera data required for ensuring constant performance of AI services that are currently executed.

Meanwhile, the policy manager 582 can determine an execution location of each AI service by aggregating current context, accumulated from the camera data, and resource information of the signal processing device 170 in the vehicle 200.

Meanwhile, the operation of the policy manager 582 described above can be performed by the signal processing device 170.

Meanwhile, the collaboration manager 580 can configure or determine an optimal edge and a cloud model by using the amount of operations of an AI model, resources, AI operation result, and the like.

Meanwhile, the collaboration user interface 585 can receive a recommended inference structure from the collaboration manager 580 and display the inference structure, and can receive user feedback.

Meanwhile, the memory 940 in the cloud can store user profile data 592, inference log and system information 594, edge/filter model information, and the like.

The signal processing device 170 according to another embodiment of the present disclosure can change an image processing sharing ratio between image processing of the camera data and image processing by the cloud 900 based on an executed service. Accordingly, a service can be provided by efficiently processing the camera data.

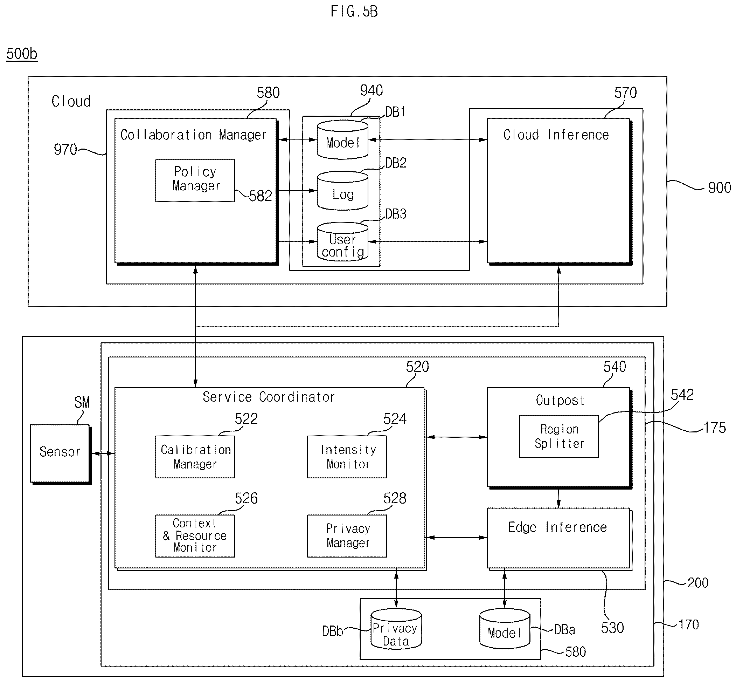

FIG. 5B is a diagram illustrating another example of a signal processing system according to an embodiment of the present disclosure.

Referring to FIG. 5B, a signal processing system 500b includes a vehicle 200, which is an edge device, and a cloud 900, similarly to FIG. 5A.

The vehicle 200 includes a sensor device SN including a plurality of sensors, and a signal processing device 170 configured to process a sensing signal from the sensor device SN.

The signal processing device 170 according to an embodiment of the present disclosure includes a processor 175 configured to receive camera data from a vehicle internal camera 195m and to transmit at least some of the camera data or information related to the camera data to a cloud 900.

The processor 175 according to an embodiment of the present disclosure performs image processing on a portion the camera data, and controls the cloud 900 to perform image processing on another portion of the camera data.

The processor 175 according to an embodiment of the present disclosure executes at least one service based on result data of the image processing performed by the processor 175 in the vehicle 200, and result data of the image processing performed by the cloud 900. Accordingly, it is possible to provide service by efficiently processing the camera data.

Meanwhile, the processor 175 can execute at least one service based on inference result data of an artificial intelligence (AI) model executed by the processor 175 in the vehicle 200, and inference result data of an AI model executed by the cloud 900. Accordingly, it is possible to provide service by efficiently processing the camera data.

Meanwhile, the signal processing device 170 according to an embodiment of the present disclosure further includes a memory 580 configured to store privacy data DBb and AI model-related data DBa.

Meanwhile, the signal processing device 170 according to an embodiment of the present disclosure can execute a service coordinator 520 that operates to provide a service, a reasoner 530 that performs AI model-based inference in the processor 175 of the vehicle 200, and a service outpost 540 that selects or reconstructs camera data, as illustrated in FIG. 5A.

Meanwhile, the service coordinator 520 can execute a calibration manager 522 configured to manage calibration, a monitor 524 configured to monitor an illumination level of the camera data and the like, a context manager 526 configured to determine context based on the result data of the reasoner 530 in the vehicle 200 or the reasoner 570 in the cloud 900, and a privacy manager 528 configured to manage privacy, as illustrated in FIG. 5A.

Meanwhile, the reasoner 530 in the processor 175 can perform AI model-based image processing required for each used service or case, and can output result data. Particularly, the reasoner 530 in the processor 175 can output inference result data.

Meanwhile, the service outpost 540 in the processor can include or execute a splitter 542 configured to separate a portion of the camera data from other portions thereof.

Meanwhile, the reasoner 530 in the processor 175 can perform a portion of image processing of the camera data separated by the splitter 542. Accordingly, it is possible to provide service by efficiently processing the camera data.

Meanwhile, the cloud 900 includes a signal processing device 970 and a memory 940.

The signal processing device 970 in the cloud 900 executes the reasoner 570 and the collaboration manager 580.

The reasoner 570 in the cloud 900 performs image processing on other portions of the camera data based on an inference request received from the signal processing device 170 of the vehicle which is an edge device.

Particularly, the reasoner 570 in the cloud 900 performs image processing on other portions of the camera data based on an AI model, and outputs inference result data to the signal processing device 170.

Meanwhile, the collaboration manager 580 can execute the policy manager 582 for policy management.

Meanwhile, the memory 940 in the cloud can store AI model-related data DB1, log data DB2, user config data DB3, profile data 592, and the like.

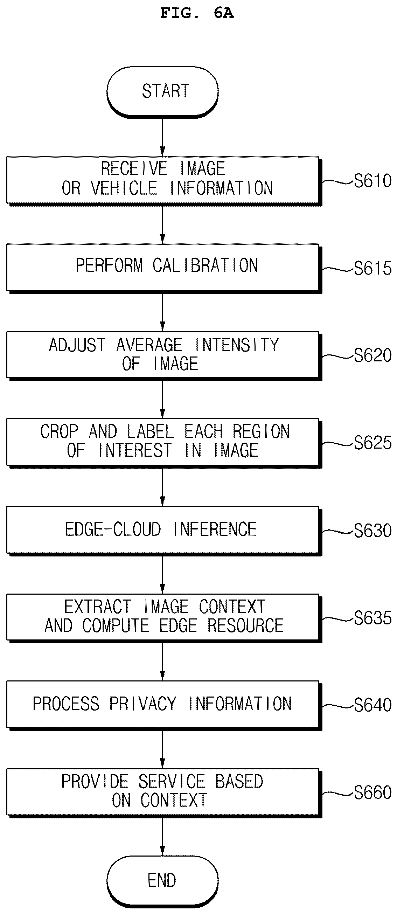

FIGS. 6A to 18 are diagrams referred to in the description of FIG. 5A or FIG. 5B.

FIG. 6A is a diagram illustrating an example of a method of operating a signal processing device according to an embodiment of the present disclosure.

Referring to FIG. 6A, the processor 175 in the signal processing device 170 receives an image or vehicle information (S610).

For example, the signal processing device 170 can receive camera data, which is image data, from the vehicle internal camera 195m and receive vehicle information, such as vehicle speed information and the like, from the sensor device SN.

Then, the processor 175 in the signal processing device 170 can perform calibration on the camera data from the vehicle internal camera 195m (S615).

For example, the processor 175 in the signal processing device 170 can perform overall camera data calibration in order to compensate for a shift of position of the camera and the like.

Then, the processor 175 in the signal processing device 170 can adjust an average intensity of the camera data (S620).

For example, the processor 175 in the signal processing device 170 can monitor an illumination level of the camera data, and can adjust the exposure time of the camera 195m based on a result of the monitoring.

Then, the processor 175 in the signal processing device 170 can extract each region of interest (ROI) from the camera data and label each region of interest (S625).

For example, the processor 175 in the signal processing device 170 can separate a portion of the camera data from another portion of the camera data, and can label each region.

Meanwhile, the processor 175 in the signal processing device 170 can be configured to extract ROIs from the camera data and label the ROIs, and transmit each of the ROIs to an AI model in the processor 175 and an AI model in the cloud 900.

Then, the processor 175 in the signal processing device 170 can perform a portion of image processing of the camera data, and can control the cloud to perform another portion of the image processing of the camera data (S630).

For example, the processor 175 in the signal processing device 170 can perform AI model-based a portion of image processing of the camera data, and can output an inference result data.

Meanwhile, the processor 175 in the signal processing device 170 can receive inference result data of the AI model performed by the cloud 900.

In another example, the processor 175 in the signal processing device 170 can perform calibration on the camera data and perform a portion of image processing of the calibrated camera data 175 in the vehicle 200 and control the cloud to perform another portion of the image processing of the calibrated camera data 900.

Then, the processor 175 in the signal processing device 170 can extract context based on the inference result data of the AI model performed by the processor 175 in the vehicle 200 and the inference result data of the AI model performed by the cloud 900 (S635).

Meanwhile, upon extracting the context, the processor 175 in the signal processing device 170 can compute an edge resource. In this case, the edge resource can be a resource of the processor 175 in the signal processing device 175.

Then, the processor 175 in the signal processing device 170 can process privacy information (S640).

For example, the processor 175 in the signal processing device 170 can determine whether privacy is required, and can perform signal processing, such as blurring and encryption processing, on the camera data if privacy is required.

Then, the processor 175 in the signal processing device 170 can provide a service based on the context (S660).

For example, the processor 175 in the signal processing device 170 can generate a final context by synchronizing result data of each of the regions which are processed by the AI model in the processor 175 or the AI model in the cloud 900, and can execute at least one service based on the final context. Accordingly, it is possible to provide service by efficiently processing the camera data. Further, customized services can be provided.

Meanwhile, unlike the drawing, operation 640 (S640) can also be performed between operation 625 (S625) and operation 630 (S630).

The processor 175 can perform signal processing on a portion related to privacy data among other portions of the camera data, and can transmit the processed camera data to the cloud 900.

For example, the processor 175 in the signal processing device 170 can transmit another portion of the camera data, which is blurred or encrypted, to the cloud 900. Accordingly, it is possible to provide service by efficiently processing the camera data while protecting privacy.

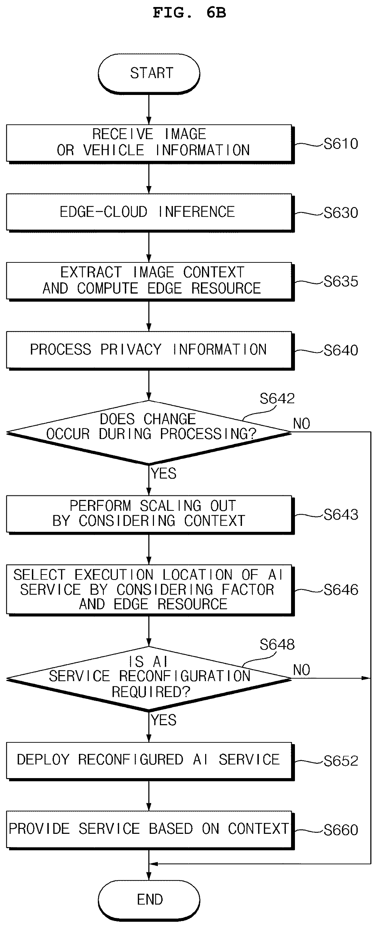

FIG. 6B is a diagram illustrating another example of a method of operating a signal processing device according to an embodiment of the present disclosure.

Referring to FIG. 6B, the processor 175 in the signal processing device 170 receives an image or vehicle information (S610).

For example, the signal processing device 170 can receive camera data, which is image data, from the vehicle internal camera 195m.

Then, the processor 175 in the signal processing device 170 can perform a portion of image processing of the camera data, and can control the cloud to perform another portion of the image processing of the camera data (S630).

For example, the processor 175 in the signal processing device 170 can perform AI model-based a portion of image processing of the camera data, and can output an inference result data.

Meanwhile, the processor 175 in the signal processing device 170 can receive inference result data of the AI model performed by the cloud 900.

Then, the processor 175 in the signal processing device 170 can extract context based on the inference result data of the AI model performed by the processor 175 in the vehicle 200 and the inference result data of the AI model performed by the cloud 900 (S635).

For example, the processor 175 in the signal processing device 170 can identify context information of passengers in each seat of a vehicle based on the inference result data of the AI model performed by the processor 175 in the vehicle 200 and the inference result data of the AI model performed by the cloud 900.

Meanwhile, upon extracting the context, the processor 175 in the signal processing device 170 can compute an edge resource. In this case, the edge resource can be a resource of the processor 175 in the signal processing device 175.

Then, the processor 175 in the signal processing device 170 can process privacy information (S640).

For example, the processor 175 in the signal processing device 170 can determine whether privacy is required, and can perform signal processing, such as blurring and encryption processing, on the camera data if privacy is required.

Then, the processor 175 in the signal processing device 170 can determine whether a change occurs during the signal processing (S642), and if so, the processor 175 can perform scaling out by considering the context (S643).

Then, the processor 175 in the signal processing device 170 can select an execution location for image processing by considering a pre-selected factor and edge resource (S646) .

Further, if service reconfiguration is required (S648), the processor 175 in the signal processing device 170 can deploy a reconfigured service (S652).

Then, the processor 175 in the signal processing device 170 can provide a service based on the context (S660).

Accordingly, it is possible to provide service by efficiently processing the camera data. Further, customized services can be provided.

That is, referring to FIG. 6B, based on a policy determined by the processor 175 or the cloud 900, the processor 175 can perform a portion of image processing of the camera data and control the cloud 900 to perform another portion of the camera data, and can change the image processing performed by the processor 175 and the image processing performed by the cloud 900 based on updating of the policy determined by the processor 175 or the cloud 900. Accordingly, it is possible to provide service by efficiently processing the camera data.

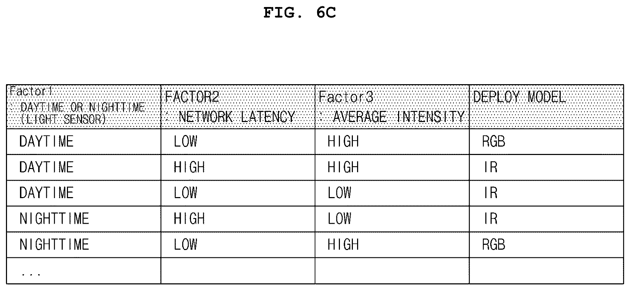

FIG. 6C is a diagram referred to in the description of operation of an RGB camera and an IR camera among cameras in a vehicle.

Referring to FIG. 6C, the vehicle internal camera 195m can include an RGB camera and an IR camera.

The processor 175 in the signal processing device 170 can perform image processing on a portion of camera data from the RGB camera or perform image processing on a portion of camera data from the IR camera, based on a policy determined by the processor 175 or the cloud 900.

The processor 175 in the signal processing device 170 can perform a portion of image processing of the camera data from the RGB camera or perform a portion of image processing of the camera data from the IR camera, based on at least one of time information as factor 1, network latency as factor 2, and average intensity as factor 3 as illustrated herein. Accordingly, it is possible to provide service by efficiently processing the camera data.

In the case of a low network latency and a high average intensity when it is daytime as illustrated herein, the processor 175 in the signal processing device 170 can operate the RGB camera, of the RGB camera and the IR camera, and can perform a portion of image processing of the camera data from the RGB camera.

Meanwhile, in the case of a high network latency and a high average intensity when it is daytime, it is desirable to use the camera data from the IR camera, rather than the camera data from the RGB camera, since the network latency is high, such that the processor 175 in the signal processing device 170 can operate the IR camera, of the RGB camera and the IR camera, and can perform a portion of image processing of the camera data from the IR camera.

Meanwhile, in the case of a low network latency and a low average intensity when it is daytime, the processor 175 in the signal processing device 170 can operate the IR camera, of the RGB camera and the IR camera, by considering the low average intensity and can perform a portion of image processing of the camera data from the IR camera.

Meanwhile, in the case of a high network latency and a low average intensity when it is nighttime, the processor 175 in the signal processing device 170 can operate the IR camera, of the RGB camera and the IR camera, and can perform a portion of image processing of the camera data from the IR camera.

Meanwhile, in the case of a low network latency and a high average intensity when it is nighttime, the processor 175 in the signal processing device 170 can operate the RGB camera, of the RGB camera and the IR camera, by considering the high average intensity and can perform a portion of image processing of the camera data from the RGB camera.

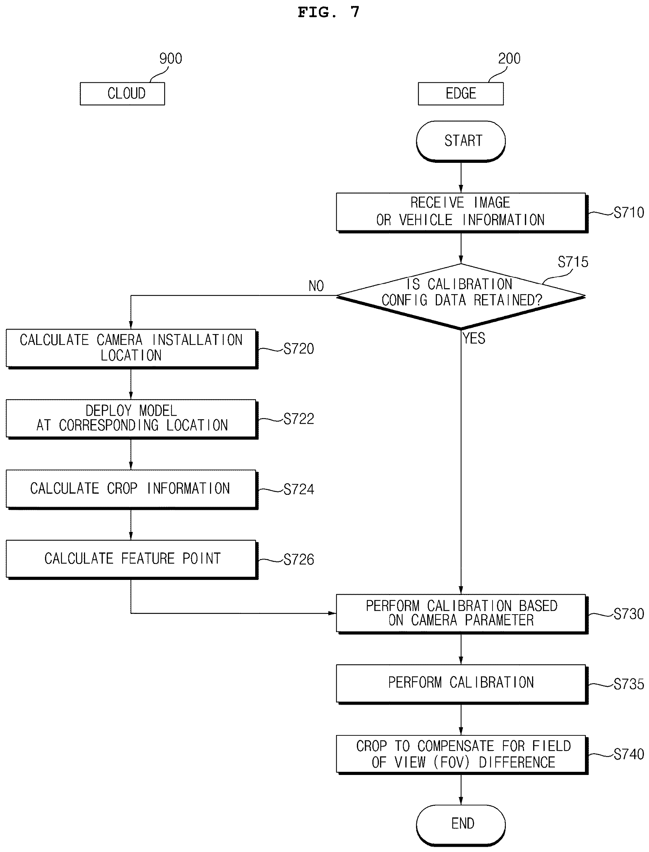

FIG. 7 is a diagram illustrating yet another example of a method of operating a signal processing device according to an embodiment of the present disclosure.

Referring to FIG. 7, the processor 175 in the signal processing device 170 receives an image or vehicle information (S710).

For example, the signal processing device 170 can receive camera data, which is image data, from the vehicle internal camera 195m.

Then, the signal processing device 170 determines whether calibration config data is retained (S715), and if so, the signal processing device 170 perform calibration based on a camera parameter (S730).

The calibration parameter can include starting point coordinates of feature point coordinates and the like.

Then, the signal processing device 170 compensates for a shift of position during driving by processing the coordinates of feature points in a vehicle (S735).

Subsequently, the signal processing device 170 can extract a portion of the camera data to compensate for a field of view (FOV) difference (S740).

Meanwhile, in the case in which the calibration config data is not retained in operation 715 (S715), the signal processing device 170 controls the policy manager 582 of the cloud 900 to calculate a camera installation location (S720), and can select and deploy an optimized AI model according to the calculated or estimated camera installation location, and can calculate extracted region information of the camera data (S724) and calculate a feature point (S726).

Operation 730 (S730) is performed after operation 726 (S726), such that the signal processing device 170 can perform calibration based on the camera parameter by using the extracted region information and the feature point which are calculated by the policy manager 582 of the cloud 900.

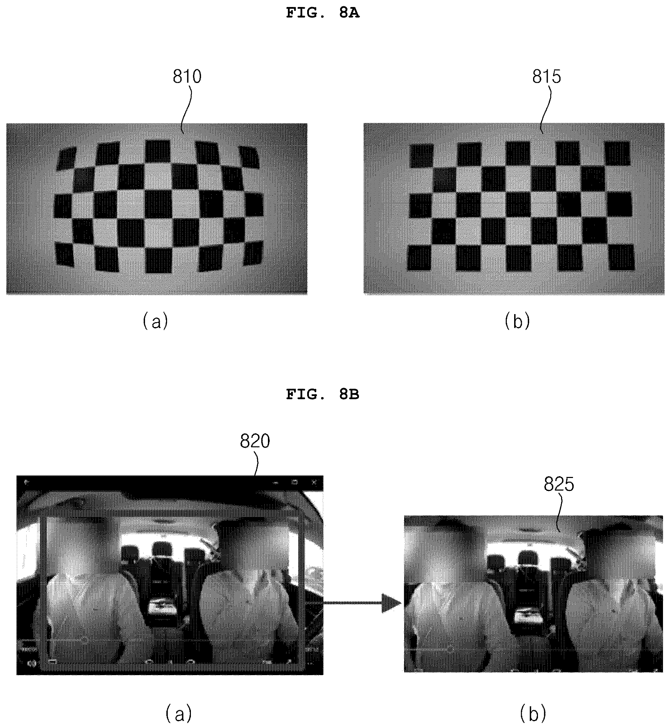

FIGS. 8A to 8D are diagrams referred to in the description of FIG. 7.

FIG. 8A is a diagram illustrating a first image 810 as camera data, and an image 815 acquired by correcting distortion of the first image 810.

Referring to FIG. 8A, the processor 175 can perform calibration on camera data of the first image 810, to output a second image 815 in which distortion is corrected.

FIG. 8B is a diagram illustrating an example of compensating for a field of view difference.

Referring to FIG. 8B, the processor 175 can correct a field of view of the camera data of a first image 820 and output a second image 825 in which the field of view is corrected.

In the drawing, an example is illustrated in which the first image 820 has a wide field of view, such that the second image 825 is generated by cropping a portion of the first image.

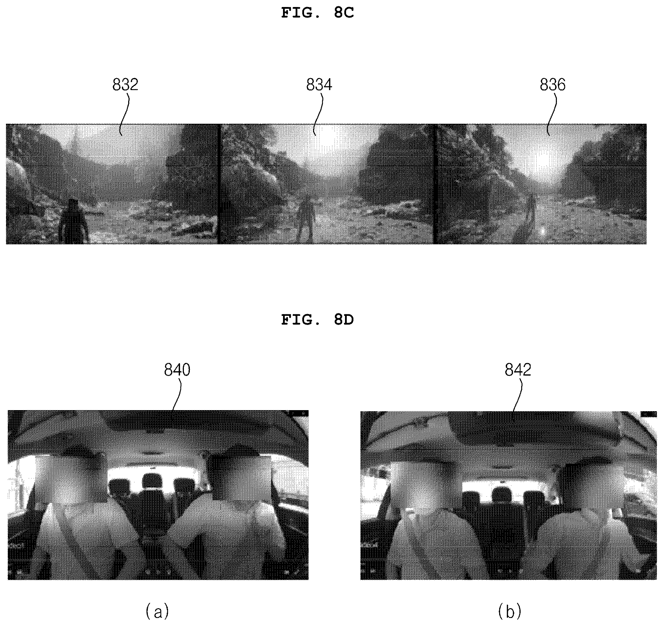

FIG. 8C is a diagram illustrating images with various field of view differences.

Referring to FIG. 8C, a first image 832, a second image 834, and a third image 836 have different fields of view.

FIG. 8D is a diagram illustrating an example of compensating for a shift of position caused by a change in position of a camera or during driving of a vehicle.

Referring to FIG. 8D, a position of the internal camera 195m is shifted during driving of a vehicle such that the angle of camera data is changed, the processor 175 can perform calibration by comparing feature points in the vehicle to apply an offset.

The first image 840 can be an image before the camera position is shifted, and the second image 842 can be an image after the camera position is shifted.

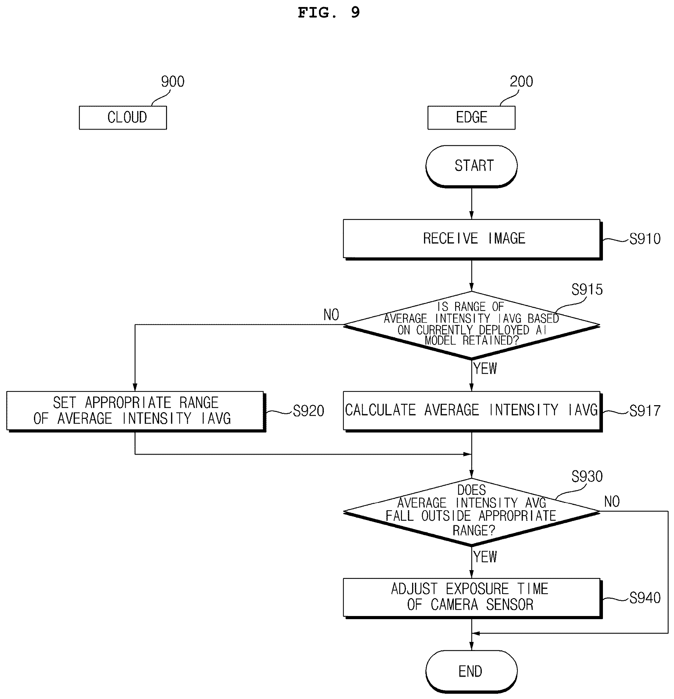

FIG. 9 is a diagram illustrating yet another example of a method of operating a signal processing device according to an embodiment of the present disclosure.

Referring to FIG. 9, the processor 175 in the signal processing device 170 receives image data (S910).

For example, the signal processing device 170 can receive camera data, which is image data, from the vehicle internal camera 195m.

Then, the signal processing device 170 determines whether a range of an average intensity Iavg or a range of an illumination level based on a currently deployed AI model is retained (S915), and if the data is retained, the signal processing device 170 calculates an average intensity Iavg or an illumination level (S917).

Meanwhile, the policy manager 582 in the cloud 900 can generate or provide appropriate average intensity range information of various AI models.

Then, the signal processing device 170 can determine whether the calculated average intensity Iavg or illumination level falls outside an appropriate range (S930), and if so, the signal processing device 170 can adjust the exposure time of the internal camera 195m (S940).

Meanwhile, if the range of the average intensity Iavg or the range of the illumination level is not retained in operation 915 (S915), the signal processing device 170 or the policy manager 582 in the cloud 900 can set the range of the average intensity Iavg or the range of the illumination level (S920).

FIGS. 10A and 10B are diagrams referred to in the description of FIG. 9.

Referring to (a) of FIG. 10A, an exposure time of the vehicle internal camera 195m can be Ta.

Meanwhile, in the case in which the illumination level of the camera data is too high and outside a predetermined range, the signal processing device 170 can control the exposure time of the vehicle internal camera 195m to be set to Tb which is less than Ta, as illustrated in (b) of FIG. 10A. Accordingly, the illumination level of the camera data can be reduced.

Meanwhile, in the case in which the illumination level of the camera data is too low and is outside a predetermined range, the signal processing device 170 can control the exposure time of the vehicle internal camera 195m to be set to Tc which is greater than Ta, as illustrated in (c) of FIG. 10A. Accordingly, the illumination level of the camera data can increase.

FIG. 10B is a diagram illustrating a range of an average intensity Iavg or a range of an illumination level for each of various AI services.

Referring to FIG. 10B, a range of an average intensity Iavg or a range of an illumination level for a face detection service can be about 40 to 210, and a range of an average intensity Iavg or a range of an illumination level for a face recognition service can be about 70 to 190.

Meanwhile, a range of an average intensity Iavg or a range of an illumination level for an object detection service can be about 50 to 200, and a range of an average intensity Iavg or a range of an illumination level for a gender estimation service can be about 40 to 210.

Meanwhile, during execution of each of the services in FIG. 10B, in the case in which each service falls outside a range of an average intensity Iavg or a range of an illumination level, the signal processing device 170 can reduce the exposure time of the vehicle internal camera 195m as illustrated in (b) of FIG. 10A or can increase the exposure time as illustrated in (c) of FIG. 10A. Accordingly, stable services can be provided based on stable camera data.

Meanwhile, an illumination level of the camera data from the IR camera is significantly changed due to external light, interior lighting, etc., such that the change of the exposure time of the vehicle internal camera 195m in FIGS. 9 to 10B is desirably applied to the camera data from the IR camera.

However, the change of the exposure time of the vehicle internal camera 195m in FIGS. 9 to 10B is not limited thereto, and can also be applied to both the data from the IR camera and the data from the RGB camera.

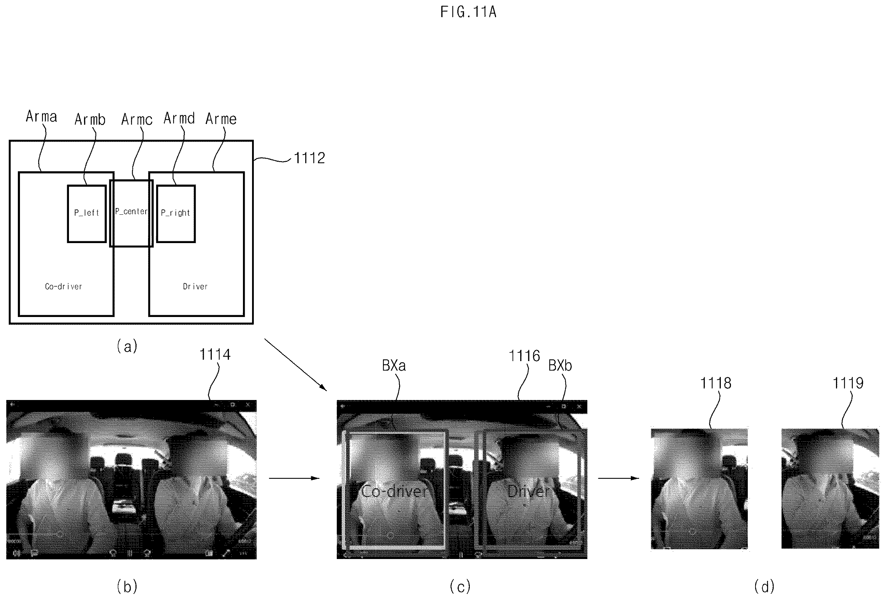

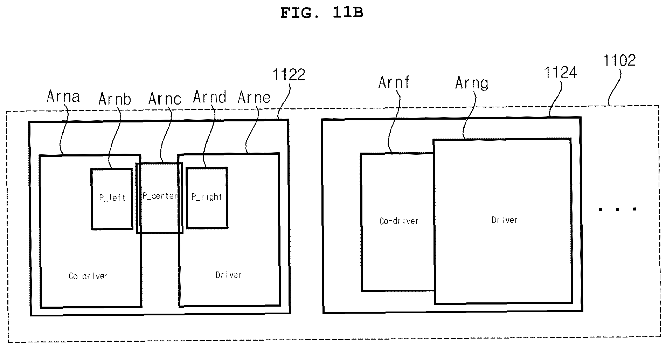

FIGS. 11A and 11B are diagrams referred to in the description of operation of the splitter 542.

FIG. 11A is a diagram illustrating an example of extracting regions from camera data by using region information 1112 including a plurality of regions of interest (ROIs) Arma to Arme.

The plurality of ROIs Arma to Arme can include a passenger seat region Arma, a left rear seat region Armb, a central rear seat region Armc, a right rear seat region Armd, and a driver seat region Arme.

The processor 175 can receive an image 1114 from the vehicle internal camera 195m, and can extract a passenger seat region image 1118 and a driver seat region image 1119 by using a first boundary Bxa and a second boundary Bxb in the region information 1112.

Meanwhile, the memory 580 in the signal processing device 170 can store the plurality of ROIs Arma to Arme.

Unlike the example, the memory 940 in the cloud 900 can store region information for each vehicle model, including a plurality of ROIs.

FIG. 11B is a diagram illustrating information about a plurality of ROIs.

Referring to FIG. 11B, the memory 940 in the cloud 900 can include first region information 1122 corresponding to a first vehicle, and second region information 1124 corresponding to a second vehicle.

The first region information 1122 corresponding to the first vehicle can include a passenger seat region Arna, a left rear seat region Armb, a central rear seat region Armc, a right rear seat region Armd, and a driver seat region Arme.

Meanwhile, the second region information 1124 corresponding to the second vehicle can include a passenger seat region Arnf and a driver seat region Arng.

Meanwhile, the region information can be stored in which the information is classified not only by vehicle type, but also by installation location for the same vehicle type.

For example, the region information can be classified into the case in which a camera is installed on the A-pillar, and the case in which a camera is installed near the rear-view mirror.

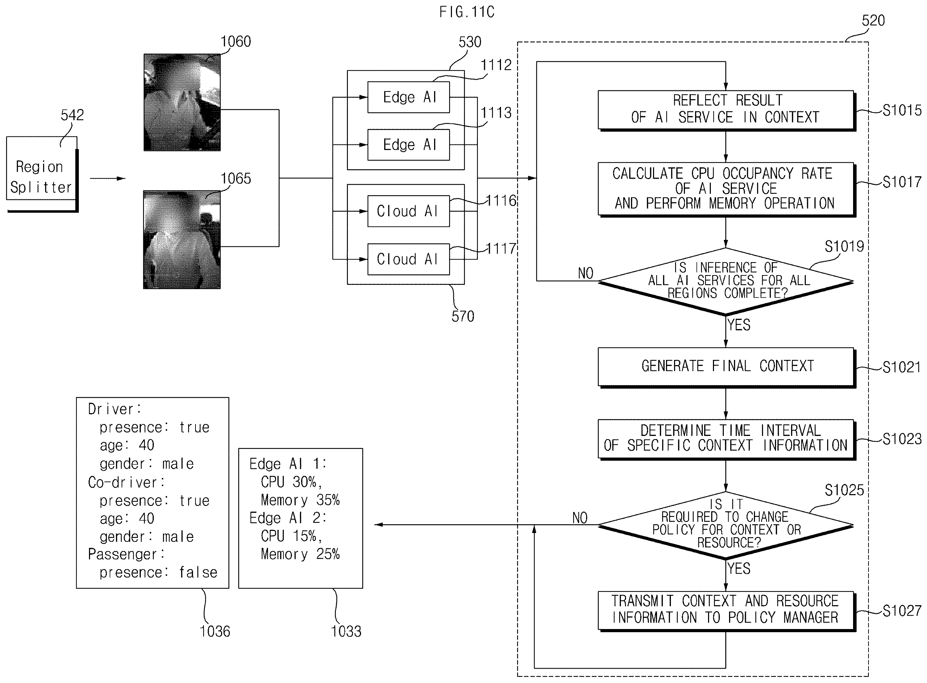

FIG. 11C is a diagram illustrating an example of performing inference and determining context based on each image extracted by the splitter 542.

Referring to FIG. 11C, each image extracted by the splitter 542 can perform inference based on AI models 1112 and 1113 in the reasoner 530 of the vehicle 200 or can perform inference based on AI models 1116 and 1117 in the reasoner 570 of the cloud 900.

Further, result data of the reasoner 530 of the vehicle 200 or the reasoner 570 of the cloud 900 are input to the context manager 526 in the signal processing device 170 for signal processing.

The context manager 526 reflects the result data, obtained as a result of completing the inference, in the context (S1015).

Then, the context manager 526 calculates occupancy rate of the processor and perform a memory operation in the signal processing device 170, in which inference is complete (S1017).

Subsequently, the context manager 526 determines whether all inference is complete (S1019), and if so, the context manager 526 generates a final context by combining and synchronizing inference result data for each of the regions of interest (S1021).

That is, the context manager 526 in the processor 175 can generate a final context by synchronizing result data for each of the regions processed by the AI model in the processor 175 or the AI model in the cloud 900.

Then, the context manager 526 in the processor 175 can determine a time interval of specific context information (S1023).

For example, the context manager 526 in the processor 175 can detect drowsiness of a driver and the like.

Then, the context manager 526 in the processor 175 can determine whether a difference occurs which requires a change in context or resources (S1025), and if no difference occurs, the context manager 526 can output context data 1036 and resource status data 1033.

The context data 1036 can include a driver's age information and gender information, a passenger's age information and gender information, and the like.

The resource status data 1033 can include processor and memory occupancy rate information for processing of a first AI model, and processor and memory occupancy rate information for processing of a second AI model.

Meanwhile, if a difference occurs in operation 1025 (S1025), the context manager 526 in the processor 175 can transmit context and resource information to the policy manager 582 (S1027).

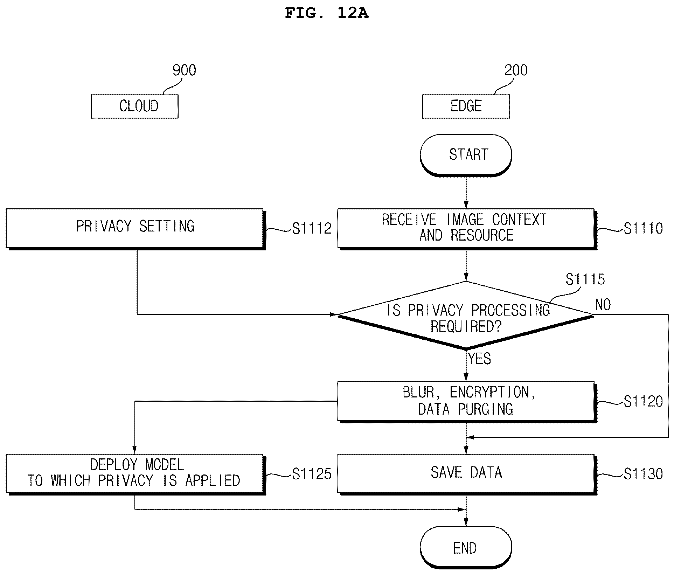

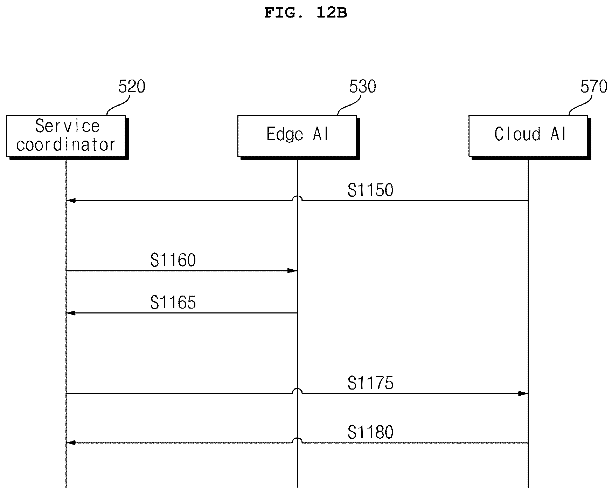

FIGS. 12A and 12B are diagrams referred to in the description of operation of the privacy manager 528.

FIG. 12A is a diagram illustrating an example of a method of operating a signal processing and a cloud.

Referring to FIG. 12A, the privacy manager 528 in the signal processing device 170 can receive context data and resource status data (S1110).

For example, the privacy manager 528 in the signal processing device 170 can receive context data and resource status data from the context manager 526.

Meanwhile, the cloud 900 can transmit privacy settings to the signal processing device 170 (S1112).

The privacy manager 528 in the signal processing device 170 can determine whether it is required to process privacy based on the privacy settings, the context data, and the resource status data (S1115), and can perform signal processing, such as blurring and encryption processing, on the camera data if privacy processing is required (S1120).

Meanwhile, the signal processing device 170 can transmit the blurred or encrypted camera data to the cloud 900.

Then, the cloud 900 can deploy a model, to which privacy is applied, based on the blurred or encrypted camera data (S1125).

Then, the privacy manager 528 can save the processed camera data, on which signal processing, such as blur and encryption processing, is performed (S1130).

FIG. 12B is a diagram illustrating another example of a method of operating a signal processing device and a cloud.

Referring to FIG. 12B, the reasoner 570 in the cloud 900 can transmit privacy settings to the service coordinator 520 in the signal processing device 170 (S1150).

The service coordinator 520 can transmit the privacy settings to the privacy manager 528 therein.

Then, the service coordinator 520 can send an inference request to the reasoner 530 in the vehicle 200 (S1160) .

The reasoner 530 in the vehicle 200 can perform inference based on the inference request, and can output context as result data (S1165).

The service coordinator 520 or the privacy manager 528 can receive the context as result data.

Meanwhile, the service coordinator 520 can send an inference request to the reasoner 570 in the cloud 900 (S1175).

The reasoner 570 in the cloud 900 can perform inference based on the inference request, and can output result data (S1180).

The service coordinator 520 can receive the result data from the reasoner 570 in the cloud 900.

Meanwhile, the service coordinator 520 can generate a final context by synchronizing result data for each of the regions processed by the AI model in the processor 175 or the AI model in the cloud 900, and can execute at least one service based on the final context. Accordingly, it is possible to provide service by efficiently processing the camera data. Further, customized services can be provided.

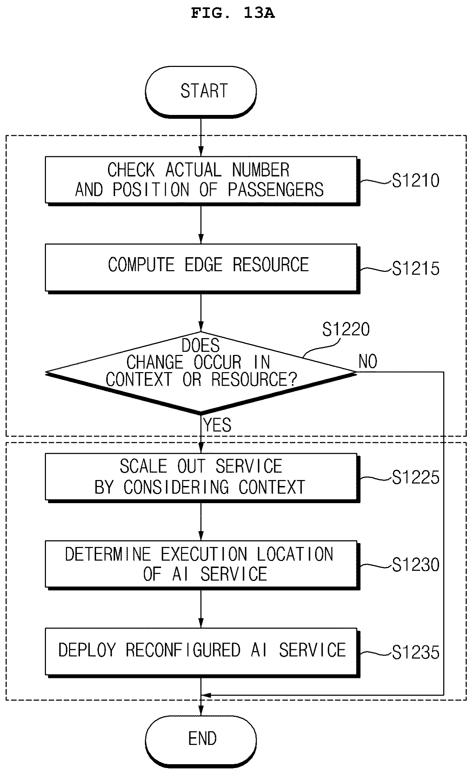

FIGS. 13A to 18 are diagrams referred to in the description of collaborative operation between the reasoner 530 in the vehicle 200 and the reasoner 570 in the cloud 900.

FIG. 13A is a diagram illustrating yet another example of a method of operating a signal processing device according to an embodiment of the present disclosure.

Referring to FIG. 13A, the context manager 526 in the signal processing device 170 receives the final context generated by the service coordinator 520.

Then, the context manager 526 in the signal processing device 170 checks the actual number and position of passengers in the vehicle (S1210).

Subsequently, the context manager 526 in the signal processing device 170 compute resources of the processor 175 (S1215).

Next, the signal processing device 170 determines whether a change occurs in context or resources (S1220), and if so, the signal processing device 170 scales out a service by considering the context (S1225).

Then, the signal processing device 170 determines an execution location of an AI service (S1230).

For example, the signal processing device 170 can change an execution location of an AI service in at least one of the processor 175 or the cloud 900.

Then, the signal processing device 170 can deploy a reconfigured AI service (S1235).

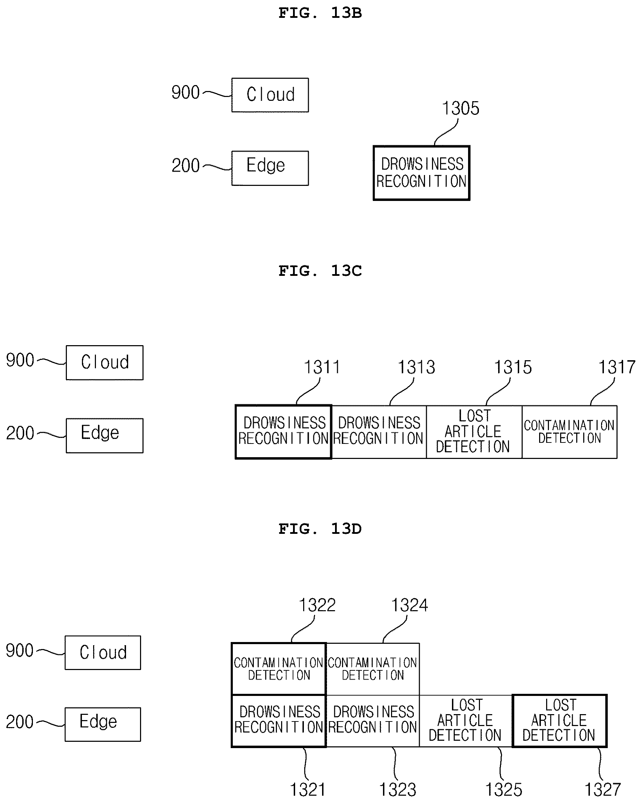

FIG. 13B is a diagram illustrating a service executed in the case in which the vehicle 200 is a taxi and only a driver is in the taxi.

Referring to FIG. 13B, the signal processing device 170 in the vehicle 200 can perform a drowsiness recognition service 1305 before a passenger boards the vehicle.

Next, FIG. 13C is a diagram illustrating a service executed in the case in which the vehicle 200 is a taxi and a driver and a passenger are in the taxi.

Referring to FIG. 13C, the signal processing device 170 in the vehicle 200 can perform a drowsiness recognition service 1311, a drowsiness recognition service 1313, a lost article detection service 1315, and a contamination detection service 1317, after the passenger sits in the rear seat.

The drowsiness recognition service 1311 can be performed based on a front seat camera model of the vehicle internal camera 195m, and the drowsiness recognition service 1313, the lost article detection service 1315, and the contamination detection service 1317 can be performed based on a rear seat camera model of the vehicle internal camera 195m.

Next, FIG. 13D is a diagram illustrating services executed in the case in which the vehicle 200 is a taxi and a driver and three passengers are in the taxi.

Referring to FIG. 13D, the signal processing device 170 in the vehicle 200 can execute a drowsiness recognition service 1321, a drowsiness recognition service 1323, a lost article detection service 1325, and a lost article detection service 1327 after the passengers board the vehicle.

Meanwhile, the signal processing device 970 in the cloud 900 can execute a contamination detection service 1322 and a contamination detection service 1324.

The drowsiness recognition service 1321, the lost article detection service 1327, and the contamination detection service 1322 can be performed based on a front seat camera model of the vehicle internal camera 195m, and the drowsiness recognition service 1323, the lost article detection service 1325, and the contamination detection service 1324 can be performed based on a rear seat camera model of the vehicle internal camera 195m.

Referring to FIGS. 13A to 13D, positions of the camera of the signal processing device 170 in the vehicle 200 can vary depending on passenger positions (passenger seat or rear seat) in the vehicle, and can perform scaling out so that different models can be used even for the same service.

Meanwhile, the services illustrated in FIGS. 13A to 13D are exemplary, and various other services and the like can be provided.

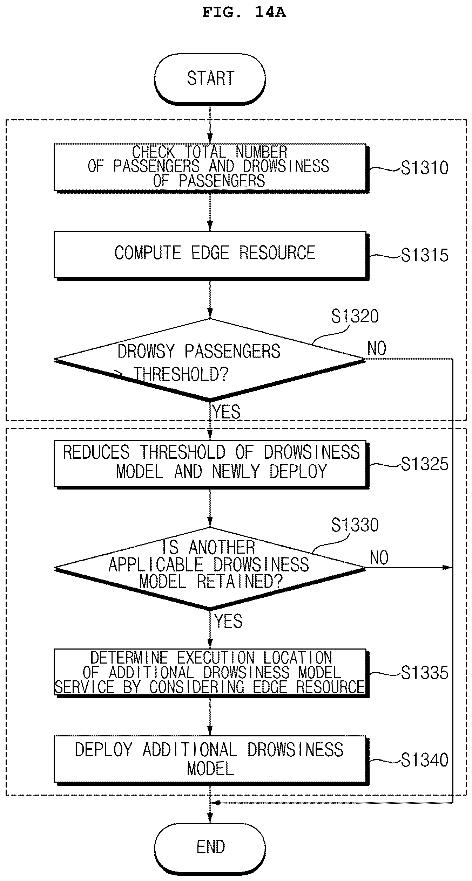

FIG. 14A is a diagram illustrating yet another example of a method of operating a signal processing device according to an embodiment of the present disclosure.

Referring to FIG. 14A, the context manager 526 in the signal processing device 170 checks a total number of passengers and drowsiness of the passengers (S1310).

Then, the context manager 526 in the signal processing device 170 computes resources of the processor 175 (S1315).

Subsequently, the signal processing device 170 determines whether the number of drowsy passengers is greater than a threshold (S1320), and if so, the signal processing device 170 reduces the threshold of a drowsiness model (S1325).

Then, the signal processing device 170 determines whether another drowsiness model is retained (S1330), and if so, the signal processing device 170 can determine an execution location of an additional drowsiness model service by considering resources of the processor 175 (S1335).

For example, the signal processing device 170 can change an execution location of an additional drowsiness model service in at least one of the processor 175 or the cloud 900.

Then, the signal processing device 170 can deploy the additional drowsiness model (S1340).

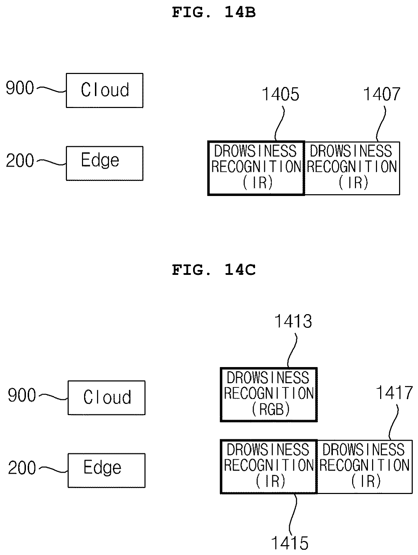

FIG. 14B is a diagram illustrating a drowsiness recognition service executed by the signal processing device 170 in the vehicle 200 at a first time point.

Referring to FIG. 14B, the signal processing device 170 in the vehicle 200 can execute a drowsiness recognition service 1405 and a drowsiness recognition service 1407.

The drowsiness recognition service 1405 can be executed based on a front seat camera model of the vehicle internal camera 195m, and the drowsiness recognition service 1407 can be executed based on a rear seat camera model of the vehicle internal camera 195m.

FIG. 14C is a diagram illustrating a drowsiness recognition service executed by the signal processing device 170 in the vehicle 200 and the cloud 900 at a second time point.

Referring to FIG. 14C, the signal processing device 170 in the vehicle 200 can execute a drowsiness recognition service 1405 and a drowsiness recognition service 1407, and the signal processing device 970 in the cloud 900 can execute a drowsiness recognition service 1413.

The drowsiness recognition service 1413 can be executed based on a front seat camera model of the vehicle internal camera 195m.

Referring to FIGS. 14A to 14C, even while providing the drowsiness recognition service, the signal processing device 170 can change the threshold of the provided service or add another retained drowsiness recognition service, by considering the overall context in the vehicle.

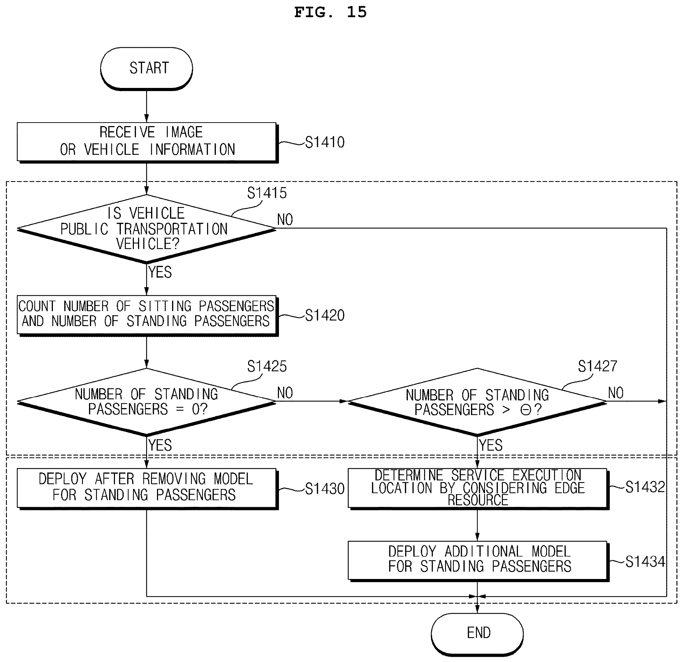

FIG. 15 is a diagram illustrating yet another example of operating a signal processing device according to an embodiment of the present disclosure.

Referring to FIG. 15, the processor 175 in the signal processing device 170 receives an image or vehicle information (S1410).

For example, the signal processing device 170 can receive camera data, which is image data, from the vehicle internal camera 195m.

The signal processing device 170 determines whether a vehicle is a public transportation vehicle (S1415), and if so, the signal processing device 170 can count the number of sitting passengers and the number of standing passengers (S1420).

Then, the signal processing device 170 can determine whether the number of standing passengers is zero (S1425), and if so, the signal processing device 170 can remove a model for the standing passengers (S1430).

Subsequently, in the case in which the number of standing passengers is not zero, the signal processing device 170 can determine whether the number of standing passengers exceeds a threshold (S1427), and if so, the signal processing device 170 can determine a service execution location by considering the resources of the processor 175 (S1432).

Then, the signal processing device 170 can add a model for the standing passengers (S1434).

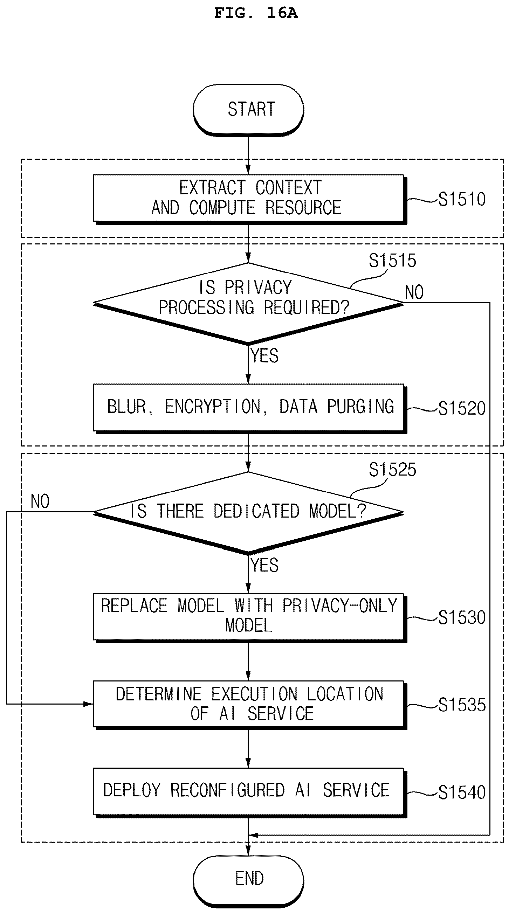

FIG. 16A is a diagram illustrating yet another example of a method of operating a signal processing device according to an embodiment of the present disclosure.

Referring to FIG. 16A, the context manager 526 in the signal processing device 170 receives a final context generated by the service coordinator 520.

Then, the context manager 526 in the signal processing device 170 extracts a context and computes resources of the processor 175 (S1510).

Subsequently, the privacy manager 528 in the signal processing device 170 determines whether privacy processing is required (S1515), and if so, the privacy manager 528 can perform signal processing, such as blurring and encryption processing, on the camera data (S1520).

Then, the signal processing device 170 determines whether there is a dedicated model (S1525), and if so, the signal processing device 170 can replace the model with a privacy-only model (S1530).

Next, the signal processing device 170 determines an execution location of an AI service (S1535).

For example, the signal processing device 170 can change an execution location of an AI service in at least one of the processor 175 or the cloud 900.

Then, the signal processing device 170 can deploy a reconfigured AI service (S1540).

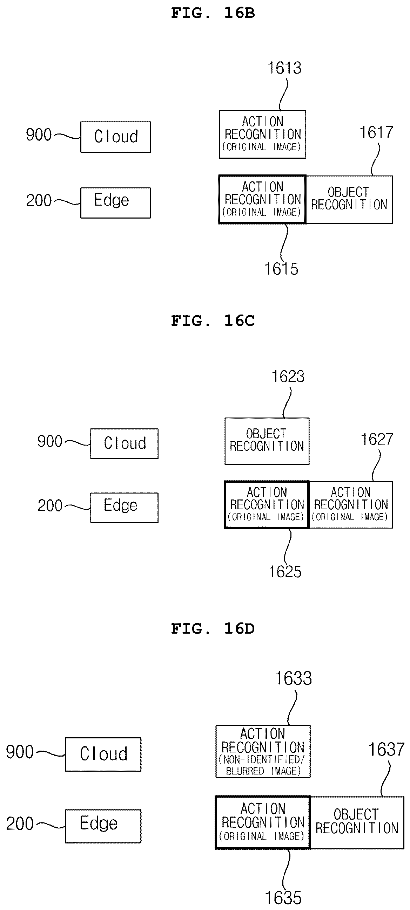

FIG. 16B is a diagram illustrating an example of a service executed in the vehicle 200.

Referring to FIG. 16B, the signal processing device 170 in the vehicle 200 can execute an action recognition service 1615 and an object recognition service 1617.

The action recognition service 1615 can be executed based on a front seat camera model of the vehicle internal camera 195m, and the object recognition service 1617 can be executed based on a rear seat camera model of the vehicle internal camera 195m.

Meanwhile, the signal processing device 970 in the cloud 900 can execute an action recognition service 1613.

Next, FIG. 16C is a diagram illustrating another example of services executed in the vehicle 200.

Referring to FIG. 16C, the signal processing device 170 in the vehicle 200 can execute an action recognition service 1625 and an action recognition service 1627.

The action recognition service 1625 can be executed based on a front seat camera model of the vehicle internal camera 195m, and the action recognition service 1627 can be executed based on a rear seat camera model of the vehicle internal camera 195m.

Meanwhile, the signal processing device 970 in the cloud 900 can execute an object recognition service 1623.

Next, FIG. 16D is a diagram illustrating yet another example of services executed in the vehicle 200.

Referring to FIG. 16D, the signal processing device 170 in the vehicle 200 can execute an action recognition service 1635 and an object recognition service 1637.

The action recognition service 1635 can be executed based on a front seat camera model of the vehicle internal camera 195m, and the object recognition service 1637 can be executed based on a rear seat camera model of the vehicle internal camera 195m.

Meanwhile, the signal processing device 970 in the cloud 900 can execute an action recognition service 1633 based on the blurred camera data.

Referring to FIGS. 16A to 16D, the signal processing device 170 in the vehicle 200 can change an AI service model deployed as a privacy-only model, depending on whether privacy is applied or not.

In the absence of the privacy-only model, the signal processing device 170 in the vehicle 200 can move and execute a privacy-related model in consideration of resources.

Meanwhile, the signal processing device 170 in the vehicle 200 can control the AI service to be performed in the cloud 900 having a privacy-only model.

Meanwhile, the service can include a drowsiness recognition service, a lost article detection service, a contamination detection service, an action recognition service or an object recognition service. Accordingly, various services can be provided while efficiently processing the camera data.

Meanwhile, the processor 175 can perform image processing on the camera data at a first time point, and can execute a first service based on result data of the image processing.

Meanwhile, the processor 175 in the vehicle 200 can perform a portion of image processing of the camera data and control the cloud 900 to perform another portion of the image processing of the camera data at a second time point, and can execute the first service based on result data of the image processing performed by the processor 175 in the vehicle 200 and result data of the image processing performed by the cloud 900. Accordingly, various services can be provided by efficiently processing the camera data.

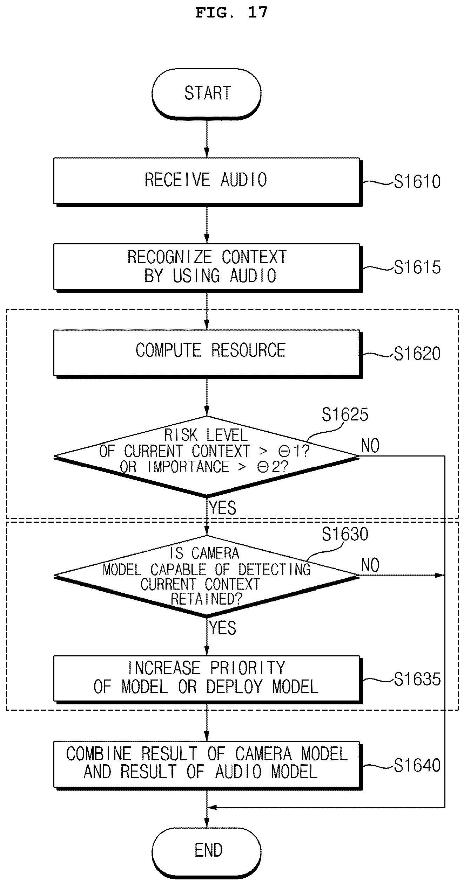

Meanwhile, based on the input audio data in the vehicle 200, the processor 175 in the vehicle 200 can perform a portion of image processing of the camera data and control the cloud 900 to perform image processing on another portion of the camera data, which will be described below with reference to FIG. 17 and subsequently figures.

FIG. 17 is a diagram illustrating yet another example of a method of operating a signal processing device according to an embodiment of the present disclosure.

Referring to FIG. 17, the processor 175 in the signal processing device 170 receives audio data in the vehicle 200 (S1610).

Then, the processor 175 in the signal processing device 170 recognizes context by using the audio data (S1615).

Subsequently, the context manager 526 in the signal processing device 170 computes resources of the processor 175 (S1620).

Next, the signal processing device 170 can determine whether a risk level of the current context exceeds a first level θ1 or whether importance thereof exceeds a second level θ2 (S1625), and if so, the signal processing device 170 determines whether a camera model capable of detecting the current context is retained (S1630), and if so, the signal processing device 170 can increase the priority of the model (S1635).

For example, the reasoner 530 in the vehicle 200 can perform inference on a portion of the camera data, and the reasoner 570 in the cloud 900 can perform inference on another portion of the camera data.

Then, the signal processing device 170 can combine the result of a camera model and the result of an audio model (S1640). Accordingly, it is possible to provide service by efficiently processing the camera data based on the audio data.

Referring to FIG. 17, the processor 175 can perform image processing on the camera data at a first time point, and can execute a first service based on result data of the image processing.

Meanwhile, the processor 175 in the vehicle 200 can perform a portion of image processing of the camera data and control the cloud 900 to perform another portion of the image processing of the camera data, based on the input audio data in the vehicle 200 at a second time point, and can execute the first service based on result data of the image processing performed by the processor 175 in the vehicle 200 and result data of the image processing performed by the cloud 900. Accordingly, it is possible to provide service by efficiently processing the camera data.

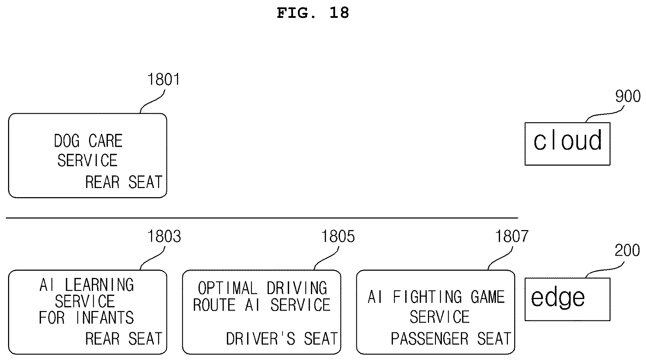

Meanwhile, the processor 175 can determine a passenger type or calculate a usage frequency based on the result data of the image processing performed by the processor 175 in the vehicle 200 and the result data of the image processing performed by the cloud 900, and can change a service to be executed or change a service execution location based on the passenger type or usage frequency, which will be described below with reference to FIG. 18 and subsequent figures.

FIG. 18 is a diagram illustrating an example of services executed by the signal processing device 170 and the cloud 900.

Referring to FIG. 18, the signal processing device 170 in the vehicle 200 can perform image processing based on the camera data, and can change a service to be executed or change a service execution location based on the passenger type or usage frequency.

For example, the signal processing device 170 in the vehicle 200 can provide a game content service for men in their 20s who like games.

In another example, the signal processing device 170 in the vehicle 200 can provide an optimal driving route service or a state service of family members in the vehicle for male drivers in their 40s.

In yet another example, the signal processing device 170 in the vehicle 200 can provide an audiovisual learning material service for male teenagers who are minors.

In yet another example, the signal processing device 170 in the vehicle 200 can provide a dog care service for pet dogs.

Meanwhile, the signal processing device 170 in the vehicle 200 can execute an AI learning service for infants 1803, an optimal driving route service 1805, and a fighting game service 1807.

Meanwhile, the signal processing device 970 in the cloud 900 can execute the dog care service.

It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A signal processing device comprising a processor configured to receive camera data from a camera in a vehicle and to transmit at least some of the camera data or information related to the camera data to a cloud,
wherein the processor is configured to perform a portion of image processing of the camera data and to control the cloud to perform another portion of the image processing of the camera data, and to execute at least one service based on result data of the image processing performed by the processor in the vehicle, and result data of the image processing performed by the cloud.

2. The signal processing device of claim 1, wherein the processor is configured to execute at least one service based on inference result data of an artificial intelligence (AI) model executed by the processor in the vehicle, and inference result data of an AI model executed by the cloud.

3. The signal processing device of claim 1, further comprising a memory configured to store privacy data,
wherein the processor is configured to perform signal processing on a portion related to the privacy data among other portions of the camera data, and to transmit the processed camera data to the cloud.

4. The signal processing device of claim 1, wherein the processor is configured to monitor an illumination level of the camera data, and to adjust exposure time of the camera based on a result of the monitoring.

5. The signal processing device of claim 1, wherein the processor is configured to perform calibration on the camera data, and to perform a portion of image processing of the calibrated camera data and control the cloud to perform another portion of the image processing of the calibrated camera data.

6. The signal processing device of claim 1, wherein the processor comprises a splitter configured to separate a portion of the camera data from another portion of the camera data,
wherein the processor is configured to perform a portion of image processing of the camera data separated by the splitter.

7. The signal processing device of claim 1, wherein based on a policy determined by the processor or the cloud, the processor is configured to perform a portion of image processing of the camera data and control the cloud to perform another portion of the image processing of the camera data, and
wherein the processor is configured to change the image processing performed by the processor and the image processing performed by the cloud based on updating of the policy determined by the processor or the cloud.

8. The signal processing device of claim 1, wherein the camera comprises an RGB camera and an IR camera,
wherein the processor is configured to perform image processing on a portion of camera data from the RGB camera or perform image processing on a portion of camera data from the IR camera, based on the policy determined by the processor.

9. The signal processing device of claim 1, wherein the camera comprises an RGB camera and an IR camera,
wherein the processor is configured to perform a portion of image processing of the camera data from the RGB camera or perform a portion of image processing of the camera data from the IR camera, based on at least one of network latency with the cloud, time information, and average intensity of the camera data.

10. The signal processing device of claim 1, wherein the processor is configured to extract regions of interest (ROIs) from the camera data and label the ROIs, and to transmit each of the ROIs to an AI model in the processor and an AI model in the cloud.

11. The signal processing device of claim 10, wherein the processor is configured to generate a final context by synchronizing result data of each of the regions which are processed by the AI model in the processor or the AI model in the cloud, and to execute at least one service based on the final context.

12. The signal processing device of claim 1, wherein the processor is configured to change priority of executed services or the number of executed services based on the number or position of passengers in the vehicle.

13. The signal processing device of claim 1, wherein the service comprises a drowsiness recognition service, a lost article detection service, or a contamination detection service, or an action recognition service or an object recognition service.

14. The signal processing device of claim 1, wherein the processor is configured to perform image processing on the camera data at a first time point and to execute a first service based on result data of the image processing, and
wherein the processor is configured to perform a portion of image processing of the camera data and control the cloud to perform another portion of the image processing of the camera data at a second time point, and to execute the first service based on result data of the image processing performed by the processor in the vehicle and result data of the image processing performed by the cloud.

15. The signal processing device of claim 1, wherein based on input audio data in the vehicle, the processor is configured to perform a portion of image processing of the camera data and control the cloud to perform another portion of the image processing of the camera data.

16. The signal processing device of claim 1, wherein the processor is configured to perform image processing on the camera data at a first time point and to execute a first service based on result data of the image processing, and
wherein the processor is configured to perform a portion of image processing of the camera data and control the cloud to perform another portion of the image processing of the camera data based on input audio data in the vehicle at a second time point, and to execute the first service based on result data of the image processing performed by the processor in the vehicle and result data of the image processing performed by the cloud.

17. The signal processing device of claim 1, wherein the processor is configured to determine a passenger type or calculate a usage frequency based on the result data of the image processing performed by the processor in the vehicle and the result data of the image processing performed by the cloud, and
wherein the processor is configured to change a service to be executed or change a service execution location based on the passenger type or usage frequency.

18. A signal processing device comprising a processor configured to receive camera data from a camera in a vehicle and to transmit at least some of the camera data or information related to the camera data to a cloud,
wherein the processor is configured to change an image processing sharing ratio between image processing of camera data and image processing by the cloud based on an executed service.

19. A vehicle display apparatus comprising the signal processing device of any one of claims 1 to 18.
